(19) Europäisches Patentamt
European Patent Office
Office européen des brevets

(11) EP 2 412 104 B1

(12) # EUROPÄISCHE PATENTSCHRIFT

(45) Veröffentlichungstag und Bekanntmachung des Hinweises auf die Patenterteilung:
**29.07.2015 Patentblatt 2015/31**

(21) Anmeldenummer: **10709830.3**

(22) Anmeldetag: **16.03.2010**

(51) Int Cl.:
***H04B 1/707*** *(2011.01)* ***H04J 11/00*** *(2006.01)*

(86) Internationale Anmeldenummer:
**PCT/EP2010/053383**

(87) Internationale Veröffentlichungsnummer:
**WO 2010/108823 (30.09.2010 Gazette 2010/39)**

(54) **KONVERTER ZUM PERFEKTEN ENTSPREIZEN VON ORTHOGONALEN CDMA-SEQUENZEN**
CONVERTER FOR PERFECT DESPREADING OF ORTHOGONAL CDMA SEQUENCES
CONVERTISSEUR DE DÉSÉTALEMENT PARFAIT DE SÉQUENCES CDMA ORTHOGONALES

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **23.03.2009 DE 102009014480**

(43) Veröffentlichungstag der Anmeldung:
**01.02.2012 Patentblatt 2012/05**

(73) Patentinhaber: **Rudershausen, Reinhart**
**86938 Schondorf am Ammersee (DE)**

(72) Erfinder: **Rudershausen, Reinhart**
**86938 Schondorf am Ammersee (DE)**

(74) Vertreter: **Lang, Johannes**
**Bardehle Pagenberg Partnerschaft mbB**
**Patentanwälte, Rechtsanwälte**
**Prinzregentenplatz 7**
**81675 München (DE)**

(56) Entgegenhaltungen:
**EP-A1- 1 726 114 US-B1- 6 567 482**

- **GOLAY M: "Complementary series" IRE TRANSACTIONS ON INFORMATION THEORY, IEEE, USA, Bd. 1, Nr. 2, 1. April 1961 (1961-04-01), Seiten 82-87, XP011217190 ISSN: 0096-1000**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft ein Verfahren und einen Decodierer zum Entspreizen eines Datensignals, welches mittels Walsh-Sequenz oder Golay-Walsh-Sequenz gespreizt ist.

Die Erfindung betrifft ein Verfahren und einen Decodierer zum Entspreizen eines Datensignals, welches mittels Spreizsequenzen gespreizt ist.

Bei Datenübertragungssystemen, welche ein Codemultiplexverfahren verwenden, wie z.B. CDMA, UMTS, GPS, RFID, WLAN und WIMAX, können mehrere Teilnehmer auf einem Nachrichtenübertragungs-Kanal gleichzeitig Daten übertragen. Damit es dennoch nicht zu Kollisionen kommt, spreizt der Sender die Datensignale der einzelnen Teilnehmer mit jeweils unterschiedlichen Spreizsequenzen (d.h. codiert sie mit einem Spreizcode, bzw. einer Codesequenz), die eine eindeutige Zuordnung der Signale in einem Empfänger ermöglichen. Durch diese Spreizung der einzelnen Datensignale kann die gesamte zur Verfügung stehende Systembandbreite genutzt werden, d.h., die genutzte Bandbreite jedes einzelnen Teilnehmers wird im Frequenzbereich vervielfacht. In praktischen Systemen werden Spreizfaktoren zwischen etwa 10 und 1000 eingesetzt.

Ein Vorteil dieses Verfahrens ist die geringe Anfälligkeit gegenüber Effekten der Mehrwegeausbreitung. Aufgrund der hohen Sendebandbreite wird immer nur ein kleiner Teil des belegten Spektrums von frequenzselektivem Rayleigh-Fading beeinflusst, so dass die typischen Signaleinbrüche wesentlich schwächer sind als bei Schmalbandsystemen. Ein weiterer Vorteil ist die geringe spektrale Leistungsdichte, welche durch den Spreizvorgang abgesenkt wird. Somit ist eine Kommunikation sogar noch unterhalb der Rauschschwelle möglich. Weitere Vorteile sind die geringe Beeinflussung durch Störsignale unterschiedlicher Ursachen (Antijamming), einschließlich der Gleichkanalinterferenz (Antiinterference) durch andere Teilnehmer, und die Wirkung der Spreizsequenz als Verschlüsselung, da die Nachricht im Empfänger nur dann detektiert werden kann, wenn der Spreizcode bekannt ist.

Bei der Spreizung wird das zu übertragende binäre Datensignal mit einer Spreizsequenz, z.B. einer (pseudo-) zufälligen, rauschähnlichen Sequenz (PN-Sequenz), über einen größeren Spektralbereich verteilt. Nach der Modulation auf dieses hochfrequente Trägersignal wird das nunmehr gespreizte Datensignal übermittelt, z.B. über die Antenne abgestrahlt. Der Empfänger demoduliert das gespreizte Datensignal und führt darauf eine Entspreizung mit einem zum Sender synchronen Spreizsignal durch.

Der Empfänger empfängt nicht nur das gespreizte Datensignal des gewünschten Teilnehmers, sondern zusätzliche gespreizte Datensignale von anderen Teilnehmern, die im gleichen Frequenzbereich senden. Durch den Entspreizvorgang im Empfänger wird allerdings nur jenes Datensignal entspreizt und in der Bandbreite verringert, welches die gleichen und synchronen Spreizsequenzen wie der Sender verwendet. Nach dem Entspreizen kann das gewünschte Datensignal leicht mittels eines signalangepassten Filters ("Matched Filter", siehe J. G. Proakis, M. Salehi, Grundlagen der Kommunikationstechnik, Pearson Studium, München, 2004, S. 793 - 797) herausgefiltert werden.

Der Filter für Spreizsequenzen lässt sich mit der Auto- und Kreuzkorrelationsfunktion (AKF) beschreiben. Diese kann für diskrete Funktionen durch eine Autokorrelationssumme ($AKF_k$) gebildet werden und gibt die statistische Bindung der Elemente einer Sequenz $X_i(k)$ mit N Elementen an:

$$AKF_k = {}_{i=0}\Sigma^{N-1-k}\, X_i\, X_{i+k}$$

wobei der Index k die relative Laufzeitverschiebung der Spreizsequenz (Verschiebung in Anzahl von Subpulsen $\tau$ bei der Berechnung der Korrelation; $0 \leq k \leq N-1$) zueinander beschreibt; bei idealen Bedingungen ohne Störungen und synchronem Empfang ergibt sich nur bei k = 0 ein Wert ungleich Null der Autokorrelation, welcher dann gerade dem Datensignal entspricht. Andere Werte, sogenannte Nebenmaxima, treten dann nicht auf.

Es existieren Spreizsequenzen deren periodische AKF fast ideal sind, z.B. die M-Sequenzen und Goldfolgen.

Es sind jedoch nicht nur die periodischen Autokorrelationseigenschaften einer Spreizsequenz für die Spreiztechnik relevant. Für Anwendungen in Codemultiplexverfahren sind auch besonders die aperiodischen Autokorrelationseigenschaften für inkohärenten Empfang und die Kreuzkorrelationseigenschaften von großem Interesse. Die Interferenz zwischen zwei verschiedenen gespreizten Datensignalen ist proportional zum Skalarprodukt der beiden Spreizsequenzen. Demnach sollten Spreizsequenzen mindestens orthogonal sein, was bedeutet, dass ihr Skalarprodukt Null ist. Jedoch reicht allein die Orthogonalität nicht aus für Anwendungen, bei denen die Spreizsequenzen nicht synchron gesendet werden oder wenn große Signalverzögerungen durch Mehrwegeausbreitung entstehen können. In diesen Fällen muss auch das Skalarprodukt verschoben um die Verzögerung $\tau$, d.h. die Kreuzkorrelationsfunktion (KKF), minimiert werden.

Die KKF ist damit ein Maß für die Eignung verschiedener Sequenzen $X_i(k)$ und $Y_j(k)$ in Codemultiplexsystemen und kann für diskrete Funktionen über die Kreuzkorrelationssumme ($KKF_k$) gebildet werden:

$$KKF_k = {}_{i=0}\Sigma^{N-1-k} X_i Y_{i+k} .$$

Je niedriger die Kreuzkorrelationswerte der Spreizsequenzen verschiedener Teilnehmersignale sind, desto geringer sind die Störungen und desto mehr Teilnehmer können am Codemultiplex teilhaben.

Es wurde in der Vergangenheit eine Vielzahl von speziellen Spreizsequenzen mit besonders guten Kreuzkorrelationseigenschaften untersucht. Ein Beispiel hierfür sind die Goldfolgen (siehe Optimal Binary Sequences for Spread Spectrum Multiplexing, R. Gold, IEEE Transactions on Information Theory, Vol. IT-13, October 1967, S. 619 - 621).

Die geringsten Kreuzkorrelationswerte der Goldfolgen, der besten bekannten Spreizsequenzen, sind jedoch auf $1 + 2^{0,5*(z+1)}$ begrenzt, wobei z die Anzahl der Schieberegisterstufen ist, (siehe H. D. Lüke, "Korrelationssignale", Springer, 1992).

In Systemen, welche Codemultiplexverfahren einsetzen, z.B. bei CDMA Vielfachzugriffssystem, wird durch hohe Werte der Kreuzkorrelation der Signal-Rauschabstand vor dem Decodierer verringert, was wiederum die maximale Teilnehmeranzahl begrenzt. Sind zusätzlich die gespreizten Datensignale der Teilnehmer unterschiedlich stark, können die nicht idealen Korrelationseigenschaften einer Spreizsequenz dazu führen, dass im Empfänger das eigentlich gesuchte gespreizte Datensignal trotz richtiger Spreizsequenz von den anderen gespreizten Datensignalen zugedeckt wird und daher nicht erkannt wird (Near-Far Effekt).

DE 197 17 546 A1 offenbart ein Verfahren und eine Vorrichtung zur Decodierung bzw. zum Demodulieren des Empfangssignals in einem CDMA Übertragungssystem, welches in serieller Codeverkettung vorliegt. Dabei wird eine zweistufige Codierung auf der Senderseite des Übertragungssystems, bestehend aus äußerer und innerer Codierung, angewendet. Die innere Codierung ist eine orthogonale mehrstufige Modulation mit Walsh-Funktionen, wohingegen es sich bei der äußeren Codierung um einen fehlerkorrigierenden Code handelt.

Ein Nachteil eines solchen Systems, welches bei der Übertragung von gespreizten Datensignalen eingesetzt wird, besteht darin, dass hier zur Fehlerkorrektur der Übertragung ein zweites Signal übertragen werden muss. Dies reduziert die zur Verfügung stehende Nutzbandbreite und ist rechnerisch sehr aufwendig.

EP 1 311 095 B1 offenbart die Verwendung von Paaren von Golay-Sequenzen zur Spreizmodulation. In dem beschriebenen Verfahren werden binäre Eingabedaten mittels $\eta$ Paaren komplementärer Golay-Sequenzen der Spreizcodierung unterzogen und diese Paare über eine Vorrichtung zur digitalen Kommunikation übermittelt. Beim Empfangen werden die so entstandenen Sequenzen mit den $\eta$ Paaren komplementärer Golay-Sequenzen mittels Korrelation gefaltet, wobei die Resultate der Faltung entsprechend den gleichen Paaren von komplementären Golay-Sequenzen summiert werden, um $\eta$ Datenströme zu erhalten.

EP 1 726 114 B1 offenbart ebenfalls die Verwendung von Paaren von Golay-Sequenzen zur Spreizmodulation. Allerdings muss hier nur eine Golay-Sequenz eines Paares übertragen werden, da die jeweilige Komplementärsequenz erst empfängerseitig erzeugt wird.

Golay-Sequenzen sind Sequenzpaare, welche die nützliche Eigenschaft haben, dass ihre phasenverschobenen aperiodischen Autokorrelationskoeffizienten sich zu null aufaddieren. So werden störende Nebenmaxima in der Autokorrelationsfunktion vermieden.

Ein Nachteil der Spreizmodulation mit reinen Golay-Sequenzen besteht darin, dass nur wenige Exemplare einer Sequenzlänge existieren. Somit ist eine Multiplexübertragung vieler gespreizter Datensignale durch die geringe Größe der Sequenzfamilie begrenzt, welche zur Spreizcodierung benötigt wird. Des Weiteren sind diese zwar orthogonal zueinander, haben also eine Nullstelle bei Verschiebung $\tau = 0$; bei Verschiebungen $\tau > 0$ zeigt die Kreuzkorrelation zwischen den verschiedenen Golay-Sequenzen jedoch störende Nebenmaxima.

Um diese Beschränkung zu überwinden, offenbart EP 1 726 114 B1 den zusätzlichen Übergang zu komplexwertigen Sequenzen unter Verwendung von DPSK (differential phase shift keying).

Dies ist aber sehr aufwendig, da sowohl ein zweites, völlig unterschiedliches Modulationssystems mit zusätzlichen Verfahrensschritten als auch zusätzliche Hardwarekomponenten benötigt werden.

Die Aufgabe der vorliegenden Erfindung ist es, ein Verfahren und eine Vorrichtung bereitzustellen, welche es ermöglichen, gespreizte Datensignale, welche mit vielen anderen gespreizten Datensignalen auf der vorhandenen Bandbreite einer Datenverbindung übertragen werden, mit geringem technischen Aufwand zu decodieren, ohne dass störendes Nebensprechen oder sonstige Beeinträchtigungen der einzelnen Datensignale durch die anderen Datensignale entstehen. Zugleich soll das Verfahren möglichst vorhandene Standards, die gespreizte Datensignale verwenden, einhalten.

Diese Aufgabe wird erfindungsgemäß durch ein Verfahren zum Entspreizen eines gespreizten Datensignals gemäß Anspruch 1, einen Decodierer zum Entspreizen eines gespreizten Datensignals gemäß Anspruch 10 und einer Vorrichtung zur digitalen Kommunikation nach Anspruch 15 gelöst. Vorteilhafte Ausgestaltungen werden in den abhängigen Ansprüchen beansprucht.

Das erfindungsgemäße Verfahren kann als Software- oder Hardware-Zusatzmodul einfach in vorhandene

Übertragungssysteme integriert werden.

Das erfindungsgemäße Verfahren hat den Vorteil, dass die Korrelationseigenschaften der übertragenen gespreizten Datensignale sehr stark verbessert werden.

Sowohl die erfindungsgemäße Summe der Auto- als auch in der Kreuzkorrelationsfunktionen der gespreizten Datensignale weisen gar keine oder zumindest wesentlich weniger und kleinere Nebenmaxima auf als ohne das Verfahren.

Ohne das erfindungsgemäße Verfahren weisen manche der bisher als Signatursequenzen in Codemultiplexsystemen verwendeten Sequenzen, wie z.B. Gold-Sequenzen und Walsh-Funktionen, schlechte aperiodische AKF und hohe Werte der KKF auf, außerdem geht ihre Orthogonalität schon bei kleinen Synchronisationsfehlern oder Fehlern durch Signalverzerrung oder Mehrwegeausbreitung verloren.

Bei asynchronem Empfang, d.h. wenn eine unbekannte, relative zeitliche Verschiebung der Spreizsequenzen zueinander besteht, wird mit dem erfindungsgemäßen Verfahren das gespreizte Datensignal wesentlich besser aus dem Rauschen erkannt und es kann besser aus Störsignalen oder Gleichkanalinterferenzen herausgefiltert werden. Das neue Verfahren kann daher nicht nur im Downlink sondern auch im Uplink eines Mobilfunksystems, z.B. bei UMTS, das bereits Walsh- und OVFS-Sequenzen verwendet, als vorteilhafte Verbesserung empfängerseitig ergänzt werden und die praktisch erreichbare Teilnehmerzahl pro Zelle in Richtung der theoretischen, vollen Systemladung - also N Teilnehmer gleichzeitig bei N Spreizsequenzen - erhöhen.

Bei synchronem Empfang in digitalen Kommunikationssystemen ist das Erhöhen der Teilnehmerzahl und/oder ein Vergrößern der Reichweite bzw. Verringern der Sendeleistung ebenfalls möglich.

Durch die guten Korrelationseigenschaften und Orthogonalität verschiedener Spreizsequenzen gemäß dem erfindungsgemäßen Verfahren erfolgt auch ein verbessertes Verhalten gegen Nebensprechen bei Frequency Hopping.

Weiterhin bietet das erfindungsgemäße Verfahren gleichzeitig mit dem idealen Empfangsimpuls eine verbesserte Möglichkeit der Start-Synchronisierung der Datenübertragung.

Auch der bei den bisher verwendeten Spreizverfahren übliche Übergang zu komplexwertigen Sequenzen mit dem zugehörigen Zusatzaufwand kann vermieden werden durch die einfache Ausnutzung interner Eigenschaften orthogonaler binärer Spreizsequenzen, wie der Walsh-Sequenzen, oder orthogonaler Golay-Walsh-Sequenzen. Nichtsdestotrotz können, da die Folgen binär bleiben, die bekannten, höherwertigen komplexen Modulationen, wie z.B. ¼-QPSK, 8-Phasenmodulation weiterhin für die bisher üblichen Zwecke genutzt werden, z.B. zur Erhöhung der Datenrate.

In einer bevorzugten Ausführungsform sind die Datensignale mit Walsh-Funktionen gespreizt. Walsh-Funktionen haben den Vorteil, dass diese streng orthogonal sind. Sie werden im Folgenden mit W(n,m) bezeichnet, wobei n die Ordnung der benutzten Walsh-Funktionenfamilie (mit 2" als Chips bezeichneten Elementen und $2^n$ verschiedenen Walsh-Funktionen) und m die jeweilige Walsh-Funktion daraus bezeichnet ($1 \leq m \leq 2^n$). Sie werden zur Spreizung sowohl als Signatursequenzen zum Trennen von Nutzerkanälen als auch zur höherstufigen orthogonalen Modulation verwendet. Die höherstufige orthogonale Modulation bietet den Vorteil einer um den Faktor n erhöhten Nutzbitrate sowie geringerer Bitfehlerwahrscheinlichkeit.

In einer weiteren bevorzugten Ausführungsform sind die Datensignale mit Golay-Walsh-Sequenzen als Spreizsequenzen gespreizt.

Golay-Walsh-Sequenzen entstehen durch Multiplikation einer Golay-Sequenz mit einer Walsh-Funktion.

Diese Spreizsequenzen werden im Folgenden als AW(n,m) analog der Walsh-Funktionen W(n,m) bezeichnet.

Die vorteilhafte komplementäre Eigenschaft der Golay-Sequenzen bleibt in den Spreizsequenzen erhalten, da die Golay-Walsh-Sequenzen nach Golay ebenfalls komplementäre Sequenzen sind (siehe dazu z.B. M.J.E. Golay, Complementary Sequences, IRE Transactions on Information Theory, Bd. IT-7, S. 82-87, April 1961). Daher weisen die Golay-Walsh-Sequenzen, genauso wie die Golay-Ausgangssequenzen, eine perfekte Autokorrelationsfunktion (AKF) mit nur einem Wert ungleich null auf, also einen idealen Empfangsimpuls. Synchronisationsfehler bei der Übertragung wirken sich durch die Addition des durch die komplementären Spreizsequenzen gespreizten Datensignals nicht mehr aus. Die Nebenmaxima der Autokorrelation werden weiterhin durch die Addition der Autokorrelation komplementärer Sequenzen beseitigt.

Durch das erfindungsgemäße Verfahren bleibt bei den Golay-Walsh-Sequenzen auch die Orthogonalität untereinander erhalten. So weisen die Kreuzkorrelationsfunktionen (KKF) der Golay-Walsh-Sequenzen keine oder nur minimale Werte auf. Damit sind sie wie die originalen Walsh-Sequenzen dank des erfindungsgemäßen Verfahrens sowohl als Signatursequenzen zur Kanaltrennung als auch für die orthogonale höherstufige Modulation zur Erhöhung der Nutzbitrate und Senkung der Bitfehlerwahrscheinlichkeit geeignet.

Das komplementäre gespreizte Datensignal wird erst im Empfänger erzeugt. Dazu werden die Chips einer empfangenen Sequenz abwechselnd mit +1 und -1 multipliziert (sogenannte Bewertung), entweder seriell bei der Verzweigung der Sequenz oder parallel nach Speicherung der empfangenen Chips. Anders als in herkömmlichen Codemultiplexverfahren wird somit nur ein gespreiztes Datensignal eines Paares komplementärer gespreizter Datensignale übertragen und auf der zur Verfügung stehenden Systembandbreite muss nur die Hälfte der Daten übertragen werden. Dies verringert zusätzlich die Anfälligkeit des Systems gegenüber Störungen des übertragenen Datensignals und eröffnet

Spielraum zur Übertragung weiterer Datensignale auf demselben Frequenzband.

Insbesondere treten die vorgenannten Vorteile des erfindungsgemäßen Verfahrens in CDMA-Systemen auf. Hier ergibt sich durch die Anwendung des Verfahrens eine schnelle Leistungsregelung, ein vereinfachter Soft-Handover an den Zellengrenzen sowie ein Frequenzwiederverwendungsfaktor N = 1 zwischen Nachbarzellen, d.h. mehr Teilnehmerkapazität durch Verwenden von mehr als einer Frequenz in einer Zelle.

In einer weiteren bevorzugten Ausführungsform der Erfindung werden zur Spreizung Walsh-Funktionen W(n,m) eingesetzt, welche in diesem Fall den Spreizsequenzen S entsprechen.

Da Walsh-Sequenzen streng orthogonal sind, können im Beispiel der Walsh-Funktionenfamilie 3. Ordnung acht Nutzer perfekt separiert werden. Walsh-Sequenzen sind demnach geeignet z.B. für den Downlink eines Mobilsystems, sofern dieser synchron ist und ein nicht frequenzselektiver Kanal vorliegt. Für den Uplink eines Codemultiplexsystems gilt diese Synchronität jedoch nicht, da die Signale der örtlich verteilten Nutzer die Basisstationen unter verschiedenen Verzögerungszeiten erreichen, so dass - auch unter nichtselektiven Kanälen - die orthogonale Eigenschaft der Walsh-Sequenzen verloren geht.

Die Mehrzahl der Werte der kreuzkorrelierten Paare liegt im Bereich der PN-Sequenzen. Extrem schlecht sind dagegen die Werte der Paare W(3,3) / W(3,6) und W(3,4) / W(3,5). Im letzteren Fall erreicht das Maximum der KKF bereits bei geringer Verschiebung von einem $\tau$ mit N - 1 = 7 fast den Maximalwert der AKF; damit ist unter asynchronen Verhältnissen keine sichere Nutzertrennung zu erreichen. Ungünstig sind auch die Breiten der AKF im Falle des Codes W(3,1) und W(3,8), wodurch bei frequenzselektiven Kanälen keine Unterdrückung benachbarter Kanalechos möglich ist. Auch bei Walsh-Sequenzen höherer Ordnung mit Sequenzlänge 32 oder höher sind die AKF- und KKF-Werte ähnlich unbefriedigend.

Unter frequenzselektiven Bedingungen können die Walsh-Funktionen als alleinige Nutzercodes deshalb im Downlink nicht verwendet werden; man multipliziert die Codemultiplexsignale zusätzlich mit einem PN-Code, um das Pfadübersprechen zu unterdrücken. Damit wird bei zunehmender Mehrnutzerinterferenzen die allmähliche Qualitätsminderung (graceful degradation) nur als Rauschen wahrgenommen; sie ist damit nicht mehr als Nebensprechen erkennbar.

Das neuartige Verfahren der Erfindung kann für diese Probleme der Walsh-Funktionen Abhilfe schaffen.

In einer weiteren bevorzugten Ausführungsform der Erfindung sind die Spreizsequenzen S orthogonale Golay-Walsh-Sequenzen, die verbesserte Korrelationseigenschaften gegenüber den Walsh-Funktionen aufweisen, wie im Folgenden beschrieben.

Zur Veranschaulichung der Bildung der Golay-Walsh-Sequenzen wird folgendes Paar komplementärer Golay-Sequenzen der Länge 8 verwendet, d.h. mit acht Chips:

A = (1, 1, 1,-1,-1,-1, 1,-1)

A'=(1, 1, 1, -1, 1, 1, -1, 1)

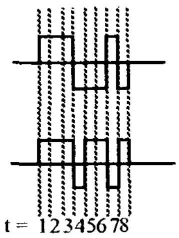


wobei t den Zeitpunkt bezeichnet, zu dem der jeweilige Chip in einem Decodierer ankommt.

Selbstverständlich können Golay-Sequenzen jeder anderen Länge verwendet werden, die sich zur Kombination mit Walsh-Funktionen eignen, d.h. insbesondere jene mit gleicher Chiplänge.

Die Golay-Sequenz A wird mit den geraden Walsh-Funktionen der Ordnung 3-W(3,m) - multipliziert, so dass sich die Golay-Walsh-Sequenzen AW(3,m) ergeben. Beispielhaft ist die Bildung der AW(3,1), AW(3,3), AW(3,5) und AW(3,7). Diese sind in der folgenden Tabelle 1 mit zwei Phasenstufen 0° und 180° dargestellt, wobei diese aus acht Subpulsen, welche den Chips entsprechen, bestehen:

Tabelle 1

| | | | | | | | | | | |
|---|---|---|---|---|---|---|---|---|---|---|
| W(3,1) | | 1 | 1 | 1 | 1 | 1 | 1 | 1 | 1 | 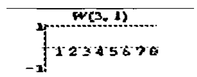 |
| AW(3,1)≡A | | 1 | 1 | 1 | -1 | -1 | -1 | 1 | -1 | 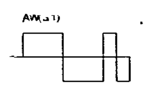 |

(fortgesetzt)

| | | | | | | | | | | |
|---|---|---|---|---|---|---|---|---|---|---|
| W(3,3) | | 1 | 1 | -1 | -1 | -1 | -1 | 1 | 1 | 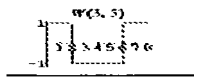 |
| AW(3,3) | | 1 | 1 | -1 | 1 | 1 | 1 | 1 | -1 | 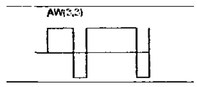 |
| W(3,5) | | 1 | -1 | -1 | 1 | 1 | -1 | -1 | 1 | 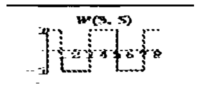 |
| AW(3,5) | | 1 | -1 | -1 | -1 | -1 | 1 | -1 | -1 | 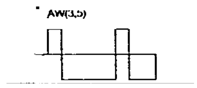 |
| W(3,7) | | 1 | -1 | 1 | -1 | -1 | 1 | -1 | 1 | 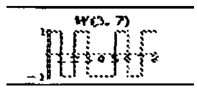 |
| AW(3,7) | | 1 | -1 | 1 | 1 | 1 | -1 | -1 | -1 | 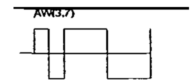 |

Die Familie der für ein Codemultiplexsystem geeigneten, orthogonalen Walsh- und Golay-Walsh-Sequenzen hat die Größe N, so dass N gespreizte Datensignale in einem Frequenzband übertragen werden können.

In einer zweiten bevorzugten Ausführungsform umfasst das Verfahren die zusätzlichen Schritte des Bildens eines gewandelten gespreizten Datensignals durch Multiplikation des gespreizten Walsh-Datensignals mit einer Golay-Sequenz, des Bildens des zeitumgekehrten gewandelten gespreizten Datensignals, des Bildens des komplementären gewandelten gespreizten Datensignals aus dem gespreizten gewandelten Datensignal und des komplementären zeitumgekehrten gewandelten Datensignals aus dem zeitumgekehrten gewandelten Datensignal durch abwechselnde Multiplikation der Chipsequenz mit +1 und -1, der Korrelation des gewandelten gespreizten Datensignals mit einer Golay-Walsh-Sequenz, des zeitumgekehrten gewandelten gespreizten Datensignals mit der zeitumgekehrten Golay-Walsh-Sequenz, des komplementären gewandelten gespreizten Datensignals mit der komplementären Golay-Walsh-Sequenz und des komplementären zeitumgekehrten gewandelten gespreizten Datensignals mit der komplementären zeitumgekehrten Golay-Walsh-Sequenz, des Summierens dieser vier Korrelationen und des Verknüpfens der beiden gebildeten Summen durch Konjunktion.

Nebenmaxima sowohl in der AKF und gleichzeitig in allen KKFs bei Walsh-Sequenzen oder Golay-Walsh-Sequenzen, welche bei wenigen Verschiebungen $\tau > 0$ noch existierten, werden durch diese Ausführungsform vollständig beseitigt.

Diese zweite Ausführungsform des Verfahrens hat daher den Vorteil, dass die Korrelationseigenschaften der übertragenen gespreizten Datensignale bis zum perfekten Optimum verbessert werden. Sowohl die erfindungsgemäßen Summen der Auto- als auch die der Kreuzkorrelationsfunktionen der entspreizten Datensignale weisen absolut keine Nebenmaximawerte verschieden von Null auf im Gegensatz zu Anwendungen ohne dieses Verfahren.

Ohne das erfindungsgemäße Verfahren weisen manche der bisher als Signatursequenzen in Codemultiplexsystemen verwendeten Sequenzen, wie z.B. Gold-Sequenzen und Walsh-Funktionen, schlechte aperiodische AKF und hohe Werte der KKF auf, außerdem geht ihre Orthogonalität schon bei kleinen Synchronisationsfehlern oder Fehlern durch Signalverzerrung oder Mehrwegeausbreitung verloren. Die Diagramme der Figs. 8 und 9 zeigen die Verbesserungsmöglichkeiten dieser Erfindung in Vielfachen gegenüber bisher verwendeter Walsh-Sequenzen bzw. Gold-Sequenzen:

Figur 8 zeigt die Vervielfachung des Haupt- zu Nebenmaximumverhältnisses von AKF und KKF gegenüber Walsh-Sequenzen.

Figur 9 zeigt die Vervielfachung des Haupt- zu Nebenmaximumverhältnisses von KKF und aperiodischer AKF gegenüber Gold-Sequenzen.

Durch diese Ausführungsform kann das gespreizte Datensignal optimal aus dem Rauschen erkannt und es

kann optimal aus Störsignalen oder Gleichkanalinterferenzen herausgefiltert werden.

In einem asynchronen CDMA-System addieren sich zum Nutzwert mit der Amplitude N die N-1 anderen Nutzer leistungsmässig am Eingang der Entscheidungsstufe, Leistungsregelung vorausgesetzt. Damit wird nach dem neuen erfindungsgemässen Verfahren das Nutz- zu Störleistungsverhältnis $N^2$ / (N-1) ~ N. D.h., mit Sequenzlänge N = 64 erhält man bereits 18 dB - zur bipolaren Übertragung würden bereits 13 dB ausreichen - , bzw. bis zu 30 dB bei Sequenzlänge 1024. Dies sind Werte, wie sie mit bisherigen Sequenzen nicht erreicht werden konnten, siehe Diagramm 1 und 2. Bisher war mit Gold-Sequenzen bei asynchronem Betrieb mit N=1024 etwa 3 dB erreichbar. Mit anderen Worten, Synchronität ist keine notwendige Voraussetzung mehr wie bei bisherigen CDM-Systemen mit deren Walsh- oder Gold-Sequenzen und die Teilnehmerzahl wird nicht durch Nebensprechen anderer Teilnehmer reduziert.

Ausführungsbeispiele der Erfindung werden nun anhand von Zeichnungen näher beschrieben.

Figur 1 zeigt ein Flussdiagramm, in welchem ein Verfahren zum Entspreizen eines gespreizten Datensignals gemäß einer ersten Ausführungsform der Erfindung dargestellt ist.

Figur 2 zeigt schematisch eine erste Realisierung einer Vorrichtung zum Ausführen des Verfahrens der ersten Ausführungsform nach Fig. 1 .

Figur 3 zeigt schematisch eine zweite Realisierung einer Vorrichtung zum Ausführen des Verfahrens der ersten Ausführungsform nach Fig. 1.

Figur 4 zeigt eine graphische Darstellung der Summe der Kreuzkorrelationssummen KF AW(3,5)/AW(3,3) und KF AW(3,5)/AW(3,5)', d.h. ohne Addition der Kreuzkorrelationssummen der zeitumgekehrten gespreizten Datensignale gemäß dem Verfahren der ersten Ausführungsform nach Fig. 1.

Figur 5 zeigt eine tabellarische Darstellung der Summe der Autokorrelationssummen KF1 bis KF4 von AW(3,1) und der Kreuzkorrelationssummen KKF1 bis KKF4 zwischen AW(3,1) und jeweils AW(3,3), AW(3,5) und AW(3,7) gemäß dem Verfahren der ersten Ausführungsform nach Fig. 1. Anhand von Fig. 1 wird nun das Verfahren nach einer der Ausführungsformen der Erfindung beschrieben. Zunächst wird in Schritt 101 das zu übertragende Datensignal im Sender mit einer Spreizsequenz S, z.B. einer PN-Sequenz, einer Goldfolge, einer Walsh-Funktion oder einer Golay-Walsh-Sequenz, gespreizt, d.h. ein Bit des Datensignals wird in eine Spreizsequenz S codiert, so dass ein gespreiztes Datensignal DS mit einer der verwendeten Spreizsequenz S entsprechenden Anzahl von Chips entsteht.

Figur 6 stellt die Korrelationen von Walsh-Sequenzen dritter Ordnung nach Ausführung der Verfahrensschritte der ersten Ausführungsform in einem Diagramm dar.

Figur 7 stellt die Korrelationen von Golay-Walsh-Sequenzen dritter Ordnung nach Ausführung der Verfahrensschritte der ersten Ausführungsform in einem Diagramm dar.

Figur 8 zeigt die Vervielfachung des Haupt- zu Nebenmaximumverhältnisses von AKF und KKF gegenüber Walsh-Sequenzen gemäß einer zweiten Ausführungsform des erfindungsgemäßen Verfahrens.

Figur 9 zeigt die Vervielfachung des Haupt- zu Nebenmaximumverhältnisses von KKF und aperiodischer AKF gegenüber Gold-Sequenzen gemäß der zweiten Ausführungsform des erfindungsgemäßen Verfahrens.

Figur 10 zeigt ein Flussdiagramm, in welchem ein Verfahren zum Entspreizen eines gespreizten Datensignals gemäß der zweiten Ausführungsform der Erfindung dargestellt ist.

Figur 11 zeigt schematisch eine erste Realisierung einer Vorrichtung zum Ausführen des Verfahrens der zweiten Ausführungsform nach Fig. 10.

Figur 12 zeigt schematisch eine zweite Realisierung einer Vorrichtung zum Ausführen des Verfahrens der zweiten Ausführungsform nach Fig. 10.

Figur 13 fasst das Gesamtergebnis des neuen Verfahrens von AKF und KKF für das Beispiel der Walsh-Sequenzen W(3,m) zusammen.

Die erste Ausführungsform des Verfahrens sowie deren Realisierungen wird im Folgenden anhand der Figs. 1 bis 8 erläutert:

> In einem Codierer wird für die Übertragung der Datensignale mehrerer Teilnehmer innerhalb eines Frequenzbandes jeweils eine der Spreizsequenzen S mit dem zu übertragenden Datensignal des zugeordneten Teilnehmers multipliziert, d.h. codiert. Da diese gespreizten Datensignale DS orthogonal zueinander sind, können die Datensignale unterschiedlicher Teilnehmer später von dem Empfänger fast störungsfrei wieder rekonstruiert werden.

Daraufhin werden die gespreizten Datensignale DS A/D-gewandelt und in Schritt 102 übertragen, z.B. über ein Funknetzwerk in einem CDMA-Mobilfunksystem oder über ein Glasfaserkabel in einem Backbone-Netzwerk.

Nach der Übertragung des gespreizten Datensignals DS im Schritt 102 wird es gemäß den Schritten 103 bis 106 im Empfänger digitalisiert und decodiert. Dabei kann der später im Einzelnen beschriebene erfindungsgemäße Decodierer zum Entspreizen des gespreizten Datensignals DS eingesetzt werden, von welchem zwei beispielhafte Realisierungen für die Chiplänge 8 der Spreizsequenzen in Fig. 2 und 3 dargestellt sind.

Zunächst wird in Schritt 103 aus dem empfangenen, z. B. mit einer Walsh-Sequenz gespreizten Datensignal DS ein zeitumgekehrtes gespreiztes Datensignal $DS_{rev}$ gebildet. Dazu werden die empfangenen Chips des gespreizten

Datensignals DS in umgekehrter Reihenfolge gespeichert.

Dann werden in Schritt 104 von diesen beiden gespreizten Datensignalen DS, $DS_{rev}$ die jeweiligen bewerteten gespreizten Datensignale DS', $DS_{rev}$' gebildet.

Dies geschieht durch serielle oder parallele alternierende Bewertung des jeweiligen gespreizten Datensignals mit +1 und -1, wie beispielhaft in der folgenden Tabelle 2 für die Golay-Walsh-Sequenz AW(3,7) dargestellt:

Tabelle 2

| | | | | | | | | | |
|---|---|---|---|---|---|---|---|---|---|
| **AW(3,7)** | | 1 | -1 | 1 | 1 | 1 | -1 | -1 | -1 |
| **Alternierende Bewertung** | | 1 | -1 | 1 | -1 | 1 | -1 | 1 | -1 |
| **AW(3,7)'** | | 1 | 1 | 1 | -1 | 1 | 1 | -1 | 1 |

Die Schritte 103 und 104 können auch in umgekehrter Reihenfolge ausgeführt werden.

Die vier gespreizten Datensignale DS, $DS_{rev}$, DS', $DS_{rev}$' werden dann mit der im Empfänger für den betreffenden Teilnehmer gespeicherten Spreizsequenz S bzw. deren Derivaten S', $S_{rev}$, oder $S_{rev}$' gemäß der Erfindung korreliert, um das ursprünglich versandte gespreizte Datensignal DS aus der Vielzahl von empfangenen gespreizten Datensignalen anderer Teilnehmer, welche auf das Frequenzband moduliert wurden, herauszufiltern.

Es ist zu beachten, dass das gespreizte Datensignal DS mit den Spreizsequenzen S, das zeitumgekehrte gespreizte Datensignal $DS_{Rev}$ mit den zeitumgekehrten Spreizsequenzen $S_{Rev}$, das bewertete gespreizte Datensignal DS' mit den bewerteten Spreizsequenzen S' und das bewertete zeitumgekehrte Datensignal $DS_{Rev}$' mit den bewerteten zeitumgekehrten Spreizsequenzen $S_{Rev}$' autokorreliert bzw. kreuzkorreliert werden, wobei die schon beschriebenen Auto- bzw. Kreuzkorrelationssummen benutzt werden:

$$AKF_k = {}_{i=0}\Sigma^{N-k-1}\ X_i\ \ X_{i+k}\ \ \text{bzw.}\ \ KKF_k = {}_{i=0}\Sigma^{N-k-1}\ X_i\ \ Y_{i+k}$$

dabei ist N die Anzahl der Chips einer Sequenz, i jeweils ein Chip in der Sequenz und k die Laufzeitverschiebung der Sequenz bei der Berechnung der einzelnen Korrelationsfunktionen $KF_k$ (Verschiebung in Anzahl der Subpulse $\tau$).

Die nachfolgenden Tabellen 3, 4, 5 und 6 zeigen als Beispiel die verschiedenen oben dargestellten Kreuzkorrelationsfunktionen für die Golay-Walsh-Sequenzen AW(3,7) und AW(3,1). Jeweils eine Spalte entspricht der Laufzeit mit welcher die Signale zueinander angekommen sind. Bei diesem Beispiel wird angenommen, dass in der Vorrichtung zur Berechung der Korrelationen die Golay-Walsh-Sequenz AW(3,1) und ihre Derivate gespeichert sind.

Tabelle 3

| | | | | | | | | | | | | | | | | |
|---|---|---|---|---|---|---|---|---|---|---|---|---|---|---|---|---|
| | | | | | | | | | | **AW(3,7)** | | | | | | |
| **AW(3,1)** | 1 | | | | | | | | | 1 | -1 | 1 | 1 | 1 | -1 | -1 | -1 |
| | 1 | | | | | | | | 1 | -1 | 1 | 1 | 1 | -1 | -1 | -1 | |
| | 1 | | | | | | | 1 | -1 | 1 | 1 | 1 | -1 | -1 | -1 | | |
| | -1 | | | | | | -1 | 1 | -1 | -1 | -1 | 1 | 1 | 1 | | | |
| | -1 | | | | | -1 | 1 | -1 | -1 | -1 | 1 | 1 | 1 | | | | |
| | -1 | | | | -1 | 1 | -1 | -1 | -1 | 1 | 1 | 1 | | | | | |
| | 1 | | | 1 | -1 | 1 | 1 | 1 | -1 | -1 | -1 | | | | | | |
| | -1 | | -1 | 1 | -1 | -1 | -1 | 1 | 1 | 1 | | | | | | | |
| **KKF1** | | | -1 | 2 | -3 | 0 | -1 | 2 | -3 | 0 | 1 | 6 | 3 | 0 | -3 | -2 | -1 |
| | | | $t_1$ | $t_2$ | $t_3$ | $t_4$ | $t_5$ | $t_6$ | $t_7$ | $t_8$ | $t_9$ | $t_{10}$ | $t_{11}$ | $t_{12}$ | $t_{13}$ | $t_{14}$ | $t_{15}$ |

Tabelle 4

| | | | | | | | | | | | | | | | | |
|---|---|---|---|---|---|---|---|---|---|---|---|---|---|---|---|---|
| | | | | | | | | | | **AW(3,7)'** | | | | | | |
| **AW(3,1)'** | 1 | | | | | | | | | 1 | 1 | 1 | -1 | 1 | 1 | -1 | 1 |
| | -1 | | | | | | | | -1 | -1 | -1 | 1 | -1 | -1 | 1 | -1 | |
| | 1 | | | | | | | 1 | 1 | 1 | -1 | 1 | 1 | -1 | 1 | | |
| | 1 | | | | | | 1 | 1 | 1 | -1 | 1 | 1 | -1 | 1 | | | |
| | -1 | | | | | -1 | -1 | -1 | 1 | -1 | -1 | 1 | -1 | | | | |
| | 1 | | | | 1 | 1 | 1 | -1 | 1 | 1 | -1 | 1 | | | | | |
| | 1 | | | 1 | 1 | 1 | -1 | 1 | 1 | -1 | 1 | | | | | | |
| | 1 | | 1 | 1 | 1 | -1 | 1 | 1 | -1 | 1 | | | | | | | |
| **KKF2** | | | 1 | 2 | 3 | 0 | 1 | 2 | 3 | 0 | -1 | 6 | -3 | 0 | 3 | -2 | 1 |
| | | | $t_1$ | $t_2$ | $t_3$ | $t_4$ | $t_5$ | $t_6$ | $t_7$ | $t_8$ | $t_9$ | $t_{10}$ | $t_{11}$ | $t_{12}$ | $t_{13}$ | $t_{14}$ | $t_{15}$ |

Tabelle 5

| | | | | | | | | | | | | | | | | |
|---|---|---|---|---|---|---|---|---|---|---|---|---|---|---|---|---|
| | | | | | | | | | | **$AW(3,7)_{Rev}$** | | | | | | |
| **$AW(3,1)_{Rev}$** | -1 | | | | | | | | | 1 | 1 | 1 | -1 | -1 | 1 | 1 | -1 |
| | 1 | | | | | | | | -1 | -1 | -1 | 1 | 1 | 1 | -1 | 1 | |
| | -1 | | | | | | | 1 | 1 | 1 | -1 | -1 | -1 | 1 | -1 | | |
| | -1 | | | | | | 1 | 1 | 1 | -1 | -1 | -1 | 1 | -1 | | | |
| | -1 | | | | | 1 | 1 | 1 | -1 | -1 | -1 | 1 | -1 | | | | |
| | 1 | | | | -1 | -1 | -1 | 1 | 1 | 1 | -1 | 1 | | | | | |
| | 1 | | | -1 | -1 | -1 | 1 | 1 | 1 | -1 | 1 | | | | | | |
| | 1 | | -1 | -1 | -1 | 1 | 1 | 1 | -1 | 1 | | | | | | | |
| **KKF3** | | | -1 | -2 | -3 | 0 | 3 | 6 | 1 | 0 | -3 | 2 | -1 | 0 | -3 | 2 | -1 |
| | | | $t_1$ | $t_2$ | $t_3$ | $t_4$ | $t_5$ | $t_6$ | $t_7$ | $t_8$ | $t_9$ | $t_{10}$ | $t_{11}$ | $t_{12}$ | $t_{13}$ | $t_{14}$ | $t_{15}$ |

Tabelle 6

| | | | | | | | | | | | | | | | | |
|---|---|---|---|---|---|---|---|---|---|---|---|---|---|---|---|---|
| | | | | | | | | | | **$AW(3,7)_{Rev}$'** | | | | | | |
| **$AW(3,1)_{Rev}$'** | -1 | | | | | | | | | 1 | -1 | 1 | 1 | -1 | 1 | 1 | 1 |
| | -1 | | | | | | | | 1 | -1 | 1 | 1 | -1 | 1 | 1 | 1 | |
| | -1 | | | | | | | 1 | -1 | 1 | 1 | -1 | 1 | 1 | 1 | | |
| | 1 | | | | | | -1 | 1 | -1 | -1 | 1 | -1 | -1 | -1 | | | |
| | -1 | | | | | 1 | -1 | 1 | 1 | -1 | 1 | 1 | 1 | | | | |
| | -1 | | | | 1 | -1 | 1 | 1 | -1 | 1 | 1 | 1 | | | | | |
| | 1 | | | -1 | 1 | -1 | -1 | 1 | -1 | -1 | -1 | | | | | | |
| | -1 | | 1 | -1 | 1 | 1 | -1 | 1 | 1 | 1 | | | | | | | |
| **KKF4** | | | 1 | -2 | 3 | 0 | -3 | 6 | -1 | 0 | 3 | 2 | 1 | 0 | 3 | 2 | 1 |
| | | | $t_1$ | $t_2$ | $t_3$ | $t_4$ | $t_5$ | $t_6$ | $t_7$ | $t_8$ | $t_9$ | $t_{10}$ | $t_{11}$ | $t_{12}$ | $t_{13}$ | $t_{14}$ | $t_{15}$ |

Abschließend wird in Schritt 106 die Summe über die vier Kreuzkorrelatiossummen des Beispiels aus den

Tabellen 3 bis 6 gebildet (vgl. Tabelle 7):

Tabelle7

| | | | $t_1$ | $t_2$ | $t_3$ | $t_4$ | $t_5$ | $t_6$ | $t_7$ | $t_8$ | $t_9$ | $t_{10}$ | $t_{11}$ | $t_{12}$ | $t_{13}$ | $t_{14}$ | $t_{15}$ |
|---|---|---|---|---|---|---|---|---|---|---|---|---|---|---|---|---|---|
| Σ **KKF1 - KKF4** | | | 0 | 0 | 0 | 0 | 0 | 16 | 0 | 0 | 0 | 16 | 0 | 0 | 0 | 0 | 0 |

Trifft in dem Decodierer mit gespeicherten Golay-Walsh-Sequenzen AW(3,1) das gespreizte Datensignal AW(3,3) oder AW(3,5) ein, ergeben die entsprechend den Tabellen 3 bis 7 berechnete Summen der Kreuzkorrelationen überall den Wert null.

Die Autokorrelationen ergeben sich entsprechend, wenn das empfangene gespreizte Datensignal DS mit derselben Spreizsequenz S gespreizt wurde die im Decodierer gespeichert ist:

$$\Sigma \text{ AKF1 - AKF4}$$

Die Autokorrelationsfunktionen AKF1 werden dabei analog zu den oben dargestellten Kreuzkorrelationen gebildet:

AKF1 = Korrelation des gespreizten Datensignals DS mit der gespeicherten Spreizsequenz S.

AKF2 = Korrelation des gespreizten bewerteten Datensignals DS' mit der gespeicherten bewerteten Spreizsequenz S'.

AKF3 = Korrelation des zeitumgekehrten gespreizten Datensignals $DS_{Rev}$ mit der gespeicherten zeitumgekehrten Spreizsequenz $S_{Rev}$.

AKF4 = Korrelation des empfangenen bewerteten zeitumgekehrten Datensignal $DS_{Rev}$' mit der gespeicherten bewerteten zeitumgekehrten Spreizsequenz $S_{Rev}$'.

Durch das erfindungsgemäße Verfahren werden die AKF- und KKF-Eigenschaften der Walsh-Sequenzen wesentlich verbessert. Das Ergebnis nach Ausführung der unten bezeichneten Verfahrensschritte zeigt folgendes Beispiel der ersten acht Korrelationen in Fig. 6.

Im Gegensatz zu den KKF der Walsh-Sequenzen ohne erfindungsgemäßes Verfahren sind mit dem Verfahren die Nebenmaxima zum überwiegenden Teil verschwunden. Allein drei Korrelationspaare W(3,1) / W(3,3) (siehe Fig.6), W(3,2) / W(3,4) und W(3,5) / W(3,7) von insgesamt 27 Möglichkeiten der Kreuzkorrelation zeigen kleine Nebenmaxima. Selbst die Autokorrelationssummen, die bei den originalen Walsh-Sequenzen dreiecksförmig breit und damit ungeeignet zur Synchronisation sind, sind verbessert und enthalten neben der Nutzsignalspitze jeweils ein vorteilhaftes Minimum, das hilft, geringe Zeitverschiebungen auszuregeln.

So befindet sich nun auf jeder Seite des Hauptmaximums der AKF ein Minimum mit einer Nullstelle bzw. sogar -1, so dass eine Laufzeitverschiebung von $\tau$ selbst bei Beeinträchtigung des Hauptmaximums ausgeglichen werden kann. Auch weisen vier der sieben KKF gar keine Werte ungleich null auf.

Erfolgt die Spreizung mit Golay-Walsh-Sequenzen AW(n,m), so werden mit dem erfindungsgemäßen Verfahren auch deren AKF- und KKF-Eigenschaften wesentlich verbessert: Diese haben folgende, innere Symmetrieeigenschaft, die im Empfangsfilter zur idealen Impulskompression mit geringen Nebenmaxima ausgenutzt wird: bei der obigen Addition werden für die Summe der AKF alle Nebenmaximawerte zu null wie aus der Tabelle in Fig. 5 ersichtlich und graphisch in Fig. 7 dargestellt. Dies ist ein großer Vorteil verglichen mit der AKF für eine Übertragung des Datensignals ohne das erfindungsgemäße Verfahren.

Des Weiteren haben die KKF zwischen den mit dem erfindungsgemäßen Spreizmodulationsverfahren gespreizten Datensignalen höchstens vier, im Vergleich zur AKF sehr kleine Werte, welche im Falle der beispielhaft angegebenen Werte für die Golay-Walsh-Sequenz mit acht Chips auch nur für jeweils drei der sieben weiteren benutzten Golay-Walsh-Sequenzen existieren, im Falle der AW(3,1) für AW(3,6), AW(3,7) und AW(3,8), wie in Fig. 5 und Fig.7 ersichtlich wird.

Fig. 5 wird im Folgenden näher erläutert. Die vier Zeilen der ersten Gruppe betreffen den Fall, dass im erfindungsgemäßen Empfänger die Golay-Walsh-Sequenz AW(3,1) und ihre Derivate gespeichert sind. Kommt in diesem

Empfänger ein gespreiztes Datensignal AW(3,1) an, so ergibt die Korrelation (erste Zeile der ersten Gruppe in Fig. 5) nur einen einzigen Ausgangsimpuls der Amplitude 32 in der Spalte $t_8$, in der die beiden Sequenzen keine gegenseitige Verschiebung aufweisen ($\tau$ = 8 oder Index k = 0). Das entspricht dem Fall der Autokorrelation.

Kommt dagegen im Empfänger mit der gespeicherten Sequenz AW(3,1) eine gespreizte Sequenz AW(3,3,) an, so ergibt die Korrelation dieser beiden Sequenzen überall null, entsprechend der zweiten Zeile der ersten Gruppe von Tabelleneinträgen.

Kommt ein gespreiztes Signal AW(3,5) an, so ergibt sich wie im zweiten Fall auch in der dritten Zeile überall der Wert null.

Kommt ein gespreiztes Datensignal AW(3,7) an, so ergibt sich entsprechend der vierten Zeile in den Spalten $t_6$ und $t_{10}$ ein Ausgangswert von 16. Dieser Korrelationswert zwischen den gespreizten Signalen AW (3,1) und AW(3,7) ist jedoch so weit vom Wert 32 der Autokorrelation des Signals AW(3,1) mit sich selbst entfernt, so dass eine eindeutige Erkennung des gewünschten Signals AW(3,1) gewährleistet ist.

Die drei Gruppen in Fig. 5 betreffen die Fälle, wenn der Empfänger die Sequenzen AW(3,3), bzw. AW(3,5) bzw. AW(3,7) und deren Derivate gespeichert hat. In allen Fällen besteht ein großer Abstand zwischen dem jeweiligen Nutzsignal mit dem Wert 32 und den Störsignalen mit dem Wert +/-16

Würde das erfindungsgemäße Verfahren ohne den Schritt der Zeitumkehr 103 und die Summierung der so berechneten Korrelationswerte ausgeführt werden, so würden mehr Werte der KKF ungleich null und ihre Beträge wären größer. Als Beispiel hierfür zeigt Fig. 4 das Ergebnis der direkten KKF ohne Zeitumkehr zwischen den Golay-Walsh-Sequenzen AW(3,5) und AW (3,3) angeführt. Wie ersichtlich, treten dort vier große Störspitzen auf, die zu Störungen beim Decodieren führen würden.

Natürlich könnten einige oder alle der hier aufgeführten und weitere eventuell eingefügte Verfahrensschritte auch im Frequenzbereich ausgeführt werden.

Zur empfängerseitigen Umsetzung des Verfahrens wird im Folgenden ein Decodierer beschrieben, welcher in zwei verschiedenen Ausführungsformen in den Fig. 2 und 3 dargestellt ist.

Der Empfänger empfängt gespreizte Datensignale DS, welche zunächst z.B. mittels eines Subpulsfilters geglättet und analog/digital gewandelt werden. Diese werden dann an den Eingang E des Decodierers angelegt. Die Einhüllende des gespreizten Datensignals DS nach einem Subpulsfilter und A/D-Wandler wird als positive oder negative Digitalzahl, hier symbolisiert als +1 bzw. -1, je nach Phasenlage des gespreizten Datensignals DS, ausgegeben. In diesen Ausführungsbeispielen handelt es sich bei den gespreizten Datensignalen DS um binäre Datensequenzen der Länge 8, d.h. acht Chips, welche mittels der Spreizsequenzen S gespreizt wurden. Selbstverständlich kann der Codierer entsprechend für jede Datensequenzlänge $2^n$ angepasst werden.

In einem Verzweiger 1 wird das digitale gespreizte Datensignal DS verzweigt.

Die seriell empfangenen Sequenzen des gespreizten Datensignals DS werden daraufhin gespeichert und in eine parallele Form gebracht. Dies kann z.B. mittels eines Schieberegisters oder eines anderen Seriell-Parallel-Umsetzers erfolgen. In der beschriebenen Ausführungsform werden die acht Chips hintereinander in die Schieberegister 2, 4, 5, 7 gespeist, welche nach jeder Subpulsdauer $\tau$ über die Zeit weiterschalten. Die Zeitpunkte, zu welchen die Chips in die Schieberegister 2, 4, 5, 7 gespeist wurden, werden durch die Zeitangaben t1 bis t8 angegeben. Zwei der Schieberegister 5, 7 werden in umgekehrter Reihenfolge befüllt, was der Zeitumkehr aus Schritt 104 des erfindungsgemäßen Verfahrens entspricht, da bei dem späteren Auslesen der Sequenz aus den Schieberegistern 5, 7 die zeitliche Anordnung der Chips vertauscht ist, also ein zeitumgekehrtes Auslesen erfolgt. In einer alternativen Ausführungsform, welche in Fig. 3 dargestellt ist, kommen nur zwei Schieberegister 4, 7 zum Einsatz. Natürlich verzweigt der Verzweiger 1 das digitale gespreizte Datensignal DS dann auch nur zweifach.

Zwei der in den Schieberegistern 2, 4, 5, 7 gespeicherten Sequenzen des gespreizten Datensignals DS werden in Komplementärform gebracht indem die Chips der Sequenzen alternierend mit +1 bzw. -1 bewertet werden. Nach der ersten Subpulsdauer $\tau$ wird z.B. nach der ersten Stelle des Schieberegisters 2, 7 ein zweites Signal abgeleitet und abwechselnd in einem Filterteil mit + und - bewertet. Durch die Bewertung des empfangenen Signalcodes mit der einfachen Folge von alternierenden Phasensprüngen $B_i$ = +, -, +, -, +, -, +, - (oder Digitalwerte +1, -1 usw. oder z.B. L, 0 usw. bei QPSK) entsteht das zugehörige bewertete gespreizte Datensignal DS', für ein mit einer Golay- oder Golay-Walsh-Sequenz gespreiztes Datensignal DS das komplementäre Datensignal DS'. Alternativ kann die Bewertung des empfangenen Signalcodes mit der +/- Folge auch in paralleler Schaltung erfolgen, wie in den Ausführungsformen der Fig. 2 und 3 dargestellt.

Sobald die Schieberegister gefüllt sind, werden die Chips parallel ausgelesen. Zwei der vier gespeicherten Sequenzen der gespreizten Datensignale DS, DS', darunter eine der beiden Sequenzen in bewerteter Form, werden wie oben erwähnt zeitumgekehrt ausgelesen, so dass Signalsequenzen eines zeitumgekehrten gespreizten Datensignals ($DS_{rev}$, $DS_{rev}$') entstehen. Die Signalsequenzen werden daraufhin (entsprechend Schritt 105 in Fig.1) in Korrelationsfiltern (KF1, KF2, KF3, KF4) mit der jeweiligen, dort gespeicherten, Spreizsequenz S(3,m), S $(3,m)_{Rev}$, S (3,m)', S $(3,m)_{Rev}$' korreliert.

Der Decodierer kann so aufgebaut werden, dass für jede der verschiedenen Spreizsequenzen S des Mehr-Teilnehmerbetriebs eine Decodierschaltung nach Fig. 2 oder 3 mit jeweils gespeicherten Spreizsequenzen S vorgesehen wird. In einer bevorzugten Ausführungsform wird nur eine Dekodierschaltung verwendet, deren Korrelationsschaltungen einen schreibbaren Speicher aufweisen, in den die Spreizsequenz S für den jeweiligen Teilnehmer gespeichert werden kann, beispielsweise bei der Initialisierung des Kommunikationsvorganges.

Abschließend wird in dem Summationsfilter 8 die Summe über die vier Auto- bzw. Kreuzkorrelationen der vier parallel verarbeiteten Signalsequenzen gebildet.

Dies kann beispielsweise mit dem Filterteil 8, gezeigt in den Fig. 2 und 3 vor dem Ausgang A der Vorrichtung, geschehen, welcher eine einfache Addition ist. Als Nutzsignal wird dabei das Autokorrelationssignal (mit Wert 32 in den Beispielen nach Fig. 5) erkannt, das von den deutlich kleineren Nebenmaxima (mit Wert 16) deutlich unterschieden ist und elektronisch ohne Weiteres verarbeitet werden kann.

Die zweite Ausführungsform des erfindungsgemäßen Verfahrens sowie deren Realisierung als Vorrichtung wird im folgenden anhand der Fig. 8 bis 13 erläutert:

Die zweite Ausführungsform des erfindungsgemäßen Verfahrens baut auf der ersten Ausführungsform auf.

Zum Decodieren wird sowohl die Summe der Korrelationen des gespreizten Datensignals DS mit gespeicherten Walsh-Sequenzen W(n,m) als auch nach Multiplikation mit der Golay-Walsh-Sequenz AW(n,1) die Korrelationen des so entstandenen gewandelten gespreizten Datensignals DAW(n,m) mit gespeicherten Golay-Walsh-Sequenzen AW(n,m), AW(n,m)', $AW(n,m)_{rev}$ und $AW(n,m)_{rev}'$ gebildet, siehe Schritte 106 und 111. Nachdem die beiden Summen in Schritt 106 und 111 gebildet sind, werden im letzten Schritt 112 beide Summen durch Konjunktion verknüpft:

$$({}_1\Sigma^4\ KF_z) \wedge ({}_5\Sigma^8\ KF_z).$$

Das Ergebnis nach Ausführung der Verfahrensschritte 101 bis 106 ohne die Ergänzung der zweiten Ausführungsform zeigen die Beispiele der ersten acht Korrelationen in den Figs. 6 und 7.

Zu jedem Wert eines Nebenmaximums einer KKF der Walsh-Sequenzen korrespondiert ein Nullwert der KKF der entsprechenden Golay-Walsh-Sequenzen bis auf das Hauptmaximum AKF bei $\tau = 0$, das voll erhalten bleibt. Mithin werden alle Nebenmaxima bei allen Verschiebungen $\tau > 0$ durch die Operation der logischen UND-Funktion unterdrückt, während die AKF das gewünschte Ergebnis aufweist: die ideale Form der Einheitspuls-Spitze bei $\tau = 0$ für die Entdeckung des Nutzsignals und gleichzeitig bei allen Verschiebungen $\tau > 0$ sind alle Nebenmaxima gleich Null.

Die drei Korrelationspaare W(3,1) / W(3,3) (siehe Fig. 6), W(3,2) / W(3,4) und W(3,5) / W(3,7) von insgesamt 27 Möglichkeiten der Kreuzkorrelation zeigen kleine Nebenmaxima. Die Autokorrelationssummen, die bei den originalen Walsh-Sequenzen dreiecksförmig breit und damit ungeeignet zur Synchronisation sind, sind zwar verbessert, enthalten aber neben der Nutzsignalspitze jeweils immer noch hohe Nebenmaxima. Dies wird in Fig. 5 ersichtlich. Kommt ein gespreiztes Datensignal AW(3,7) an, so ergibt sich entsprechend der vierten Zeile in den Spalten $t_6$ und $t_{10}$ ein Ausgangswert von 16. Dieser Wert wird jedoch durch die im Folgenden dargestellte Konjunktion mit der Summe der Walsh-Sequenzen-Korrelationen, die überall den Wert Null hat, unterdrückt.

Die im Empfänger durch Multiplikation erzeugten Golay-Walsh-Sequenzen AW(n,m) haben folgende, innere Symmetrieeigenschaft, die im Empfangsfilter zur idealen Impulskompression ausgenutzt wird: bei der obigen Addition werden für die Summe der AKF alle Nebenmaximawerte zu null wie aus der Tabelle in Fig. 5 ersichtlich und graphisch in Diagramm 2 dargestellt. Mithin gilt bei einer UND-Verknüpfung der AKF-Ergebnisse der Zeilen W(3,1)/W(3,1) mit den Ergebnissen der entsprechenden Golay-Walsh-Sequenz AW(3,1)/AW(3,1) für die Summe der AKF:

Beispiel 1:

W(3,1)/W(3,1): 0,8,0,16,0,24,0,32,0,24,0,16,0,8,0 Logisch "UND"
AW(3,1)/AW(3,1): 0,0,0,0,0,0,0,32,0,0,0,0,0,0,0 = 0,0,0,0,0,0,0,32,0,0,0,0,0,0,0

Des Weiteren haben die KKF zwischen den mit den Verfahrensschritten 101 bis 106 gespreizten Datensignalen der ersten Ausführungsform immer noch vier, im Vergleich zur AKF sehr kleine Werte, welche im Falle der beispielhaft angegebenen Werte für die Golay-Walsh-Sequenz mit acht Chips auch für jeweils drei der sieben weiteren benutzten Golay-Walsh-Sequenzen existieren, im Falle der AW(3,1) für AW(3,6), AW(3,7) und AW(3,8), wie in Fig. 6 und Fig. 7 ersichtlich wird.

Durch die zweite Ausführungsform des erfindungsgemäßen Verfahrens werden sowohl die AKF- wie auch die KKF-Eigenschaften der Walsh-Sequenzen bis zum absoluten Optimum verbessert, denn die UND-Verknüpfung der Summen der KKF von Walsh-Sequenzen mit denen der Golay-Walsh-Sequenzen führt zum vollständigen Auslöschen

der Nebenmaxima, wie die folgenden zwei Beispiele zeigen:

Beispiel 2:

W(3,1)/W(3,3): 0,8,0,0,0,-8,0,0,0,-8,0,0,0,8,0 Logisch "UND"
AW(3,1)/AW(3,3): 0,0,0,0,0,0,0,0,0,0,0,0,0,0,0 = 0,0,0,0,0,0,0,0,0,0,0,0,0,0,0 Diagramm 4

Beispiel 3:

W(3,1)/W(3,7): 0,0,0,0,0,0,0,0,0,0,0,0,0,0,0 Logisch "UND"
AW(3,1)/AW(3,7): 0,0,0,0,0,16,0,16,0,0,0,0,0,0,0 = 0,0,0,0,0,0,0,0,0,0,0,0,0,0,0

Dies gilt ebenfalls für alle weiteren Summen der KKF wie aus den beiden Diagrammen ersichtlich.

Figur 13 fasst das Gesamtergebnis des neuen Verfahrens von AKF und KKF für das Beispiel der Walsh-Sequenzen W(3,m) zusammen.

Der Vergleich mit einer UND-Operation im Empfänger des Ausgangswerts aus den Korrelationssummen der Walsh-Sequenzen nach Verfahrensschritten 101 bis 106 mit dem Schwellwert aus den Korrelationssummen der Golay-Walsh-Sequenzen liefert also eine absolut reine Impulsspitze ohne Nebenmaxima für die AKF und alle KKF bleiben ebenfalls absolut Null wie im Diagramm 5 oben dargestellt.

Das Verfahren ist ebenfalls anwendbar, wenn statt der Walsh-Sequenzen die entsprechenden Golay-Walsh-Sequenzen ausgesandt werden. Im ersten Teil des Verfahrens der Schritte 101 bis 106 werden Golay-Walsh-Sequenzen korreliert und summiert, im zweiten Teil des Verfahrens entstehen dann im Empfangsfilter nach dem Multiplikationsschritt die korrespondierenden Walsh-Sequenzen und deren Korrelationssummen mittels der Schritte 107 bis 111. Es existieren zu jeder Sequenzlänge N mehrere Golay-Sequenzen, aus denen Golay-Walsh-Sequenzen erzeugt werden können (siehe dazu z.B. M.J.E. Golay, Complementary Sequences, IRE Transactions on Information Theory, Bd. IT-7, S. 82-87, April 1961), die ebenfalls als Basis für das neue Verfahren eingesetzt werden können.

Die genannten Decodierer können alternativ mit digitalen Signalprozessoren (DSP) realisiert werden. Eine weitere Möglichkeit der Realisierung besteht darin, die schnelle Fouriertransformation DFFT und/oder die schnelle Hadamardtransformation im Decodierer zu verwenden. Entsprechendes gilt für eine Vorrichtung zur Übertragung digitaler Datensignale, welche einen Codierer und den Decodierer gemäß der Erfindung umfasst.

Bezugszeichenliste

| | |
|---|---|
| 1 | Verzweiger |
| 2 | Schieberegister |
| 3 | Multiplikationsfilter |
| 4 und 5 | Schieberegister |
| 6 | Multiplikationsfilter |
| 7 | Schieberegister |
| 8 | Summationsfilter |
| KF1 | Korrelationsfilter 1 |
| KF2 | Korrelationsfilter 2 |
| KF3 | Korrelationsfilter 3 |
| KF4 | Korrelationsfilter 4 |
| 9 | Schieberegister |
| 10 | Multiplikationsfilter |
| 11 | Verzweiger |
| 12 | Schieberegister |
| 13 | Multiplikationsfilter |
| 14 und 15 | Schieberegister |
| 16 | Multiplikationsfilter |
| 17 | Schieberegister |

| | |
|---|---|
| 18 | Summationsfilter |
| KF5 | Korrelationsfilter 5 |
| KF6 | Korrelationsfilter 6 |
| KF7 | Korrelationsfilter 7 |
| KF8 | Korrelationsfilter 8 |
| 19 | Konjunktionsfilter |

**Patentansprüche**

**1.** Verfahren zum Entspreizen eines gespreizten Datensignals (DS), welches mittels einer Spreizsequenz (S) gespreizt ist, die folgenden Schritte umfassend:

a) Bilden (104) des komplementären gespreizten Datensignals (DS') aus dem gespreizten Datensignal (DS) durch abwechselnde Multiplikation der Chips der Sequenz mit +1 uns -1 ;
b) Bilden der Korrelationen (105) des gespreizten Datensignals (DS) mit der Spreizsequenz (S), und des komplementären gespreizten Datensignals (DS') mit der komplementären Spreizsequenz (S');

**dadurch gekennzeichnet, dass** weiter die Schritte enthalten sind:

c) Bilden (103) eines zeitumgekehrten gespreizten Datensignals ($DS_{Rev}$) aus dem gespreizten Datensignal (DS);
d) Bilden (104) eines zeitumgekehrten komplementären gespreizten Datensignals ($DS_{Rev}$') durch abwechselnde Multiplikation der Chips der Sequenz mit +1 und -1;
e) Bilden der Korrelationen des zeitumgekehrten gespreizten Datensignals ($DS_{Rev}$) mit der zeitumgekehrten Spreizsequenz ($S_{Rev}$) und des zeitumgekehrten komplementären gespreizten Datensignals ($DS_{Rev'}$) mit der zeitumgekehrten komplementären Spreizsequenz ($S_{Rev'}$);
f) Summieren der Korrelationen aus Schritt b) und Schritt e).

**2.** Verfahren zum Entspreizen nach Anspruch 1, wobei die Spreizsequenz (S) eine Walsh-Funktion (W(n,m)) ist.

**3.** Verfahren zum Entspreizen nach Anspruch 1, wobei die Spreizsequenz (S) ein Exemplar eines Paares komplementärer Golay-Walsh-Sequenzen (AW(n,m), AW(n,m)') (101) ist, welche durch Multiplikation einer Golay-Sequenz (A) eines Paares von Golay-Sequenzen zur Basis zwei (A, A') mit einer Walsh-Funktion (W(m,n)) entstehen.

**4.** Verfahren nach Anspruch 3, wobei nur ein Exemplar eines Paares komplementärer gespreizter Datensignale (DS, DS') vom Sender zum Empfänger übertragen wird und die komplementären gespreizten Datensignale (DS', $DS_{Rev}$') aus dem gespreizten Datensignal (DS) bzw. aus dem zeitumgekehrten gespreizten Datensignal ($DS_{Rev}$) gebildet werden.

**5.** Verfahren nach einem der Ansprüche 1 bis 4, des weiteren die folgenden Schritte umfassend:

g) Bilden (107) eines gewandelten gespreizten Datensignals (DAW) durch Multiplikation des gespreizten Datensignals (DS) mit einer Golay-Walsh-Sequenz (AW(n,1));
h) Bilden (108) des zeitumgekehrten gewandelten gespreizten Datensignals ($DAW_{Rev}$);
i) Bilden (109) des komplementären gewandelten gespreizten Datensignals (DAW') aus dem gespreizten gewandelten Datensignal (DAW) und des komplementären zeitumgekehrten gewandelten gespreizten Datensignals ($DAW_{Rev}$') aus dem zeitumgekehrten gewandelten gespreizten Datensignal ($DAW_{Rev}$) durch abwechselnde Multiplikation der Chipsequenz mit +1 und -1;
j) Korrelation (110) des gewandelten gespreizten Datensignals (DAW) mit einer Golay-Walsh-Sequenz (AW), des zeitumgekehrten gewandelten gespreizten Datensignals ($DAW_{Rev}$) mit der zeitumgekehrten Golay-Walsh-Sequenz ($AW_{Rev}$), des komplementären gewandelten gespreizten Datensignals (DAW') mit der komplementären Golay-Walsh-Sequenz (AW') und des komplementären zeitumgekehrten gewandelten gespreizten Datensignals ($DAW_{Rev}$') mit der komplementären zeitumgekehrten Golay-Walsh-Sequenz ($AW_{Rev}$');
k) Summieren (111) der vier Korrelationen aus Schritt j); und
1) Verknüpfen (112) der Summe aus Schritt f) und der Summe aus Schritt k) durch Konjunktion.

**6.** Verfahren nach einem der Ansprüche 1 bis 5, wobei das komplementäre gespreizte Datensignal (DS') vor dem zeitumgekehrten gespreizten Datensignal ($DS_{Rev}$') gebildet wird.

**7.** Verfahren nach einem der Ansprüche 1 bis 6, wobei die Sequenzen (DS, S) eine Länge von $2^n$ Chips aufweisen, wobei n eine natürliche Zahl ist.

**8.** Verfahren nach einem der vorhergehenden Ansprüche 1 bis 7, wobei die Verfahrensschritte zumindest teilweise im Frequenzbereich ausgeführt werden.

**9.** Decodierer zum Entspreizen eines gespreizten Datensignals (DS), umfassend:

Mittel (1) zur Verzweigung des gespreizten Datensignals (DS);
Mittel (2, 4, 5, 7) zum Speichern von mindestens zwei verzweigten gespreizten Datensignalen (DS);
Mittel (3, 6) zum Bilden und Speichern von komplementären gespreizten Datensignalen (DS') aus den gespreizten Datensignalen (DS);
**dadurch gekennzeichnet, dass** weiter enthalten sind:

Mittel zum Auslesen der gespeicherten gespreizten Datensignale (DS, DS'), wobei jeweils ein gespreiztes Datensignalen (DS) und ein komplementäres gespreiztes Datensignal (DS') als zeitumgekehrte gespreizte Datensignale (DSRev, DSRev') ausgelesen werden;
erste Mittel (KF1, KF2, KF3, KF4) zur Korrelation (105) des gespreizten Datensignals (DS) mit der Spreizsequenz (S), des zeitumgekehrten gespreizten Datensignals (DSRev) mit der zeitumgekehrten Spreizsequenz (SRev), des komplementären gespreizten Datensignals (DS') mit der komplementären Spreizsequenz (S') und des komplementären zeitumgekehrten gespreizten Datensignals (DSRev') mit der komplementären zeitumgekehrten Spreizsequenz (SRev'); und
erste Mittel (8) zum Summieren der vier Korrelationen des ersten Mittels zur Korrelation.

**10.** Decodierer nach Anspruch 9, wobei das Datensignal (DS) mittels einer Walsh-Funktion (W(n,m)) gespreizt ist.

**11.** Decodierer nach Anspruch 9, wobei das Datensignal (DS) mittels einer Golay-Walsh-Sequenz (AW(n,m)) gespreizt ist, welche durch Multiplikation einer Golay-Sequenz (A) eines Paares von Golay-Sequenzen zur Basis zwei (A, A') mit einer Walsh-Funktion (W(m,n)) entsteht.

**12.** Decodierer nach Anspruch 9 bis 11, wobei die Mittel zur Bildung der Komplementärsequenzen (3, 6) Multiplikationsfilter sind, welche die einzelnen Chips einer Sequenz abwechselnd mit +1 und -1 multiplizieren.

**13.** Decodierer nach einem der Ansprüche 9 bis 12, wobei die Mittel zur Korrelation (KF1, KF2, KF3, KF4) Korrelationsfilter, die Mittel zum Summieren (8) Summationsfilter und die Mittel zum Speichern (2, 4, 5, 7) Schieberegister sind.

**14.** Dekodierer nach einem der Ansprüche 9 bis 13, weiter enthaltend:

Mittel zum Bilden (107) eines gewandelten gespreizten Datensignals (DAW) durch Multiplikation des gespreizten Datensignals (DS) mit einer Golay-Walsh-Sequenz (AW(n,1));
Mittel zum Bilden (108) des zeitumgekehrten gewandelten gespreizten Datensignals ($DAW_{Rev}$);
Mittel zum Bilden (109) des komplementären gewandelten gespreizten Datensignals (DAW') aus dem gespreizten gewandelten Datensignal (DAW) und des komplementären zeitumgekehrten gewandelten gespreizten Datensignals ($DAW_{Rev}'$) aus dem zeitumgekehrten gewandelten gespreizten Datensignal ($DAW_{Rev}$) durch abwechselnde Multiplikation der Chipsequenz mit +1 und -1;
zweite Mittel zur Korrelation (110) des gewandelten gespreizten Datensignals (DAW) mit einer Golay-Walsh-Sequenz (AW), des zeitumgekehrten gewandelten gespreizten Datensignals ($DAW_{Rev}$) mit der zeitumgekehrten Golay-Walsh-Sequenz ($AW_{Rev}$), des komplementären gewandelten gespreizten Datensignals (DAW') mit der komplementären Golay-Walsh-Sequenz (AW') und des komplementären zeitumgekehrten gewandelten gespreizten Datensignals ($DAW_{Rev}'$) mit der komplementären zeitumgekehrten Golay-Walsh-Sequenz ($AW_{Rev}'$);
zweite Mittel zum Summieren (111) der vier Korrelationen des zweiten Mittels zur Korrelation; und
Mittel zum Verknüpfen (112) der Summe aus dem ersten Mittel zum Summieren und der Summe aus dem zweiten Mittel zum Summieren durch Konjunktion.

**15.** Vorrichtung zur digitalen Kommunikation mit Spreizmodulation, welches senderseitig einen Codierer zum Spreizen von Datensignalen mit Spreizsequenzen (S) und empfängerseitig einen Decodierer nach einem der Ansprüche 9 bis 14 umfasst.

## Claims

1. A method for despreading a spread data signal (DS), which has been spread by means of a spreading sequence (S), comprising the following steps:

   a) forming (104) the complementary spread data signal (DS') from the spread data signal (DS) through alternating multiplication of the chips of the sequence by +1 and -1;
   b) forming the correlations (105) of the spread data signal (DS) with the spreading sequence (S) and the complementary spread data signal (DS') with the complementary spreading sequence (S'),

   **characterized by** further comprising the steps:

   c) forming (103) the time-reversed spread data signal ($DS_{Rev}$) from the spread data signal (DS);
   d) forming (104) the time-reversed complementary spread data signal ($DS_{Rev'}$)through alternating multiplication of the chips of the sequence by +1 and -1;
   e) forming the correlations of the time-reversed spread data signal ($DS_{Rev}$) with the time-reversed spreading sequence ($S_{Rev}$) and of the time-reversed complementary spread data signal ($DS_{Rev'}$) with the time-reversed complementary spreading sequence ($S_{Rev'}$); and
   f) summing the correlations from step b) and step e).

2. The method for despreading according to claim 1, wherein the spreading sequence (S) is a Walsh function (W(n,m)).

3. The method for despreading according to claim 1, wherein the spreading sequence (S) is a representation of a pair of complementary Golay-Walsh sequences (AW(n,m), AW(n,m)') (101), which are generated through multiplication of one Golay sequence (A) of a pair of Golay sequences of base two (A, A') by a Walsh function (W(m,n)).

4. The method according to claim 3, wherein only one representation of a pair of complementary spread data signals (DS, DS') is transmitted from the transmitter to the receiver and the complementary spread data signals (DS', $DS_{Rev'}$) are formed from the spread data signal (DS) or from the time-reversed spread data signal ($DS_{Rev}$).

5. The method according to one of the claims 1 to 4, further comprising the following steps:

   g) forming (107) a transformed spread data signal (DAW) through multiplication of the spread data signal (DS) by a Golay-Walsh sequence (AW(n,1));
   h) forming (108) the time-reversed transformed spread data signal ($DAW_{Rev}$);
   i) forming (109) the complementary transformed spread data signal (DAW') from the spread transformed data signal (DAW) and the complementary time reversed transformed spread data signal ($DAW_{Rev'}$) from the time reversed transformed spread data signal ($DAW_{Rev}$) through alternating multiplication of the chip sequence by +1 and -1;
   j) correlating (110) the transformed spread data signal (DAW) with a Golay-Walsh sequence (AW), the time-reversed transformed spread data signal ($DAW_{Rev}$) with the time-reversed Golay-Walsh sequence ($AW_{Rev}$), the complementary transformed spread data signal (DAW') with the complementary Golay-Walsh sequence (AW'), and the complementary time-reversed transformed spread data signal ($DAW_{Rev'}$) with the complementary time-reversed Golay-Walsh sequence ($AW_{Rev'}$);
   k) summing (111) the four correlations from step j); and
   1) combining (112) the sum from step f) and the sum from step k) through conjunction.

6. The method according to one of the claims 1 to 5, wherein the complementary spread data signal (DS') is formed prior to the time-reversed spread data signal ($DS_{Rev}$).

7. The method according to one of the claim 1 to 6, wherein the sequences (DS, S) have a length of $2^n$ chips, where n is a natural number.

8. The method according to one of the claims 1 to 7, wherein the method steps are at least partially carried out in the frequency domain.

9. Decoder for the despreading of a spread data signal (DS), comprising:

means (1) for splitting the spread data signal (DS);
means (2, 4, 5, 7) for storing at least two split spread data signals (DS);
means (3, 6) for forming and storing complementary spread data signals (DS') from the spread data signals (DS);
**characterized by** further comprising:

means for reading out the stored spread data signals (DS, DS'), whereby a spread data signal (DS) and a complementary spread data signal (DS') are each read out as time-reversed spread data signals ($DS_{Rev}$, $DS_{Rev'}$);
first means (KF1, KF2, KF3, KF4) for correlating (105) the spread data signal (DS) with the spreading sequence (S), the time-reversed spread data signal ($DS_{Rev}$) with the time-reversed spreading sequence ($S_{Rev}$), the complementary spread data signal (DS') with the complementary spreading sequence (S'), and the complementary time-reversed spread data signal ($DS_{Rev'}$) with the complementary time-reversed spreading sequence ($S_{Rev'}$); and
first means (8) for summing the four correlations of the first means for correlating.

**10.** The decoder according to claim 9, wherein the data signal (DS) is spread by means of a Walsh function (W(n,m)).

**11.** The decoder according to claim 9, wherein the data signal (DS) is spread by means of a Golay-Walsh sequence (AW(n,m)), which is generated through multiplication of a Golay sequence (A) of a pair of Golay sequences of base two (A, A') by a Walsh function (W(m,n)).

**12.** The decoder according to claim 9 to 11, wherein the means for forming the complementary sequences (3, 6) are multiplication filters, which alternatingly multiply the individual chips of a sequence by +1 and -1.

**13.** The decoder according to one of the claims 9 to 12, wherein the means for correlating (KF1, KF2, KF3, KF4) are correlation filters, the means for summing (8) are summation filters and the means for storing (2, 4, 5, 7) are shift registers.

**14.** Decoder according to one of the claims 9 to 13, further comprising:

means for forming (107) a transformed spread data signal (DAW) through multiplication of the spread data signal (DS) by a Golay-Walsh sequence (AW(n,1));
means for forming (108) the time-reversed transformed spread data signal ($DAW_{Rev}$);
means for forming (109) the complementary transformed spread data signal (DAW') from the spread transformed data signal (DAW) and the complementary time reversed transformed spread data signal ($DAW_{Rev'}$) from the time reversed transformed spread data signal ($DAW_{Rev}$) through alternating multiplication of the chip sequence by +1 and -1;
second means for correlating (110) the transformed spread data signal (DAW) with a Golay-Walsh sequence (AW), the time-reversed transformed spread data signal ($DAW_{Rev}$) with the time-reversed Golay-Walsh sequence ($AW_{Rev}$), the complementary transformed spread data signal (DAW') with the complementary Golay-Walsh sequence (AW'), and the complementary time-reversed transformed spread data signal ($DAW_{Rev'}$) with the complementary time-reversed Golay-Walsh sequence ($AW_{Rev'}$);
second means for summing (111) the four correlations from the second means for correlating; and
means for combining (112) the sum from the first means for summing and the sum from the second means for summing through conjunction.

**15.** Apparatus for digital communication with spread modulation, which on the transmitter side comprises a coder for the spreading of data signals with spreading sequences (S) and on the receiver side comprises a decoder according to one of the claim 9 to 14.

## Revendications

**1.** Procédé pour désétaler un signal de données étalé (DS), qui est étalé à l'aide d'une séquence d'étalement (S), qui comprend les étapes suivantes :

a) formation (104) du signal de données étalé complémentaire (DS') du signal de données étalé (DS) par multiplication alternée des bribes de la séquence par +1 est -1 ;

b) formation des corrélations (105) du signal de données étalé (DS) avec la séquence d'étalement (S), et du signal de données étalé complémentaire (DS') avec la séquence d'étalement complémentaire (S') ;

**caractérisé en ce qu'**il comprend en outre les étapes suivantes :

c) formation (103) du signal de données étalé à inversion temporelle ($DS_{Rev}$) à partir du signal de données étalé (DS) ;
d) formation (104) d'un signal de données étalé complémentaire à inversion temporelle ($DS_{Rev}$') par multiplication des bribes de la séquence en alternance par +1 et -1 ;
e) formation des corrélations du signal de données étalé à inversion temporelle ($DS_{Rev}$) avec la séquence d'étalement à inversion temporelle ($S_{Rev}$) et du signal de données étalé complémentaire à inversion temporelle ($DS_{Rev}$') avec la séquence d'étalement complémentaire à inversion temporelle ($S_{Rev}$) ;
f) sommation des corrélations de l'étape b) et de l'étape e).

2. Procédé de désétalement selon la revendication 1, dans lequel la séquence d'étalement (S) est une fonction de Walsh (W(n,m)).

3. Procédé de désétalement selon la revendication 1, dans lequel la séquence d'étalement (S) est un exemplaire d'une paire de séquences de Golay-Walsh complémentaires (AW(n,m)AW(n,m)') (101), qui sont créées par multiplication d'une séquence de Golay (A) d'une paire de séquences de Golay en base deux (A, A') par une fonction de Walsh (W(m,n)).

4. Procédé selon la revendication 3, dans lequel seulement un exemplaire d'une paire de signaux de données étalés complémentaires (DS, DS') est transmis de l'émetteur au récepteur, et les signaux de données étalés complémentaires (DS', $DS_{Rev}$') sont formés respectivement à partir du signal de données étalé (DS) et du signal de données étalé à inversion temporelle ($DS_{Rev}$).

5. Procédé selon l'une des revendications 1 à 4, qui comprend en outre les étapes suivantes :

g) formation (107) d'un signal de données étalé converti (DAW) par multiplication du signal de données étalé (DS) par une séquence de Golay-Walsh (AW(n,1)) ;
h) formation (108) d'un signal de données étalé converti à inversion temporelle ($DAW_{Rev}$) ;
i) formation (109) du signal de données étalé converti complémentaire (DAW') à partir du signal de données converti étalé (DAW) et du signal de données étalé converti complémentaire à inversion temporelle ($DAW_{Rev}$') à partir du signal de données étalé altéra à inversion temporelle ($DAW_{Rev}$) par multiplication de la séquence de bribes en alternance par +1 et -1 ;
j) corrélation (110) du signal de données étalé converti (DAW) avec une séquence de Golay-Walsh (AW), du signal de données étalé converti à inversion temporelle ($DAW_{Rev}$) avec la séquence de Golay-Walsh à inversion temporelle ($AW_{Rev}$), du signal de données étalé converti complémentaire DAW' avec la séquence de Golay-Walsh complémentaire (AW') et du signal de données étalé converti complémentaire à inversion temporelle ($DAW_{Rev}$') avec la séquence de Golay-Walsh complémentaire à inversion temporelle ($AW_{Rev}$') ;
k) sommation (111) des quatre corrélations de l'étape j) ; et
l) association, par conjonction, de la somme de l'étape f) et de la somme de l'étape k).

6. Procédé selon l'une des revendications 1 à 5, dans lequel le signal de données étalé complémentaire (DS') est formé avant le signal de données étalé à inversion temporelle ($DS_{Rev}$').

7. Procédé selon l'une des revendications 1 à 6, dans lequel les séquences (DS, S) ont une longueur de $2^n$ bribes, n étant un nombre entier.

8. Procédé selon l'une des revendications 1 à 7, dans lequel les étapes du procédé sont au moins en partie mises en oeuvre dans la gamme de fréquence.

9. Décodeur pour désétaler un signal de données étalé (DS), comprenant :

des moyens (1) pour ramifier le signal de données étalé (DS) ;
des moyens (2, 4, 5, 7) pour stocker au moins deux signaux de données étalés ramifiés (DS) ;
des moyens (3, 6) pour former et stocker des signaux de données étalés complémentaires (DS') à partir des

signaux de données étalés (DS) ;
**caractérisé en ce qu'**il contient en outre :

des moyens pour lire les signaux de données étalés stockés (DS, DS'), un signal de données étalé (DS) et un signal de données étalé complémentaire (DS') étant lus à la fois en tant que signaux de données étalés à inversion temporelle ($DS_{Rev}$, $DS_{Rev}$') ;
des premiers moyens (KF1, KF2, KF3, KF4) pour la corrélation (105) du signal de données étalé (DS) avec la séquence d'étalement (S), du signal de données étalé à inversion temporelle (DSRev) avec la séquence d'étalement à inversion temporelle (SRe), du signal de données étalé complémentaire (DS') avec la séquence d'étalement complémentaire (S') et du signal de données étalé complémentaire à inversion temporelle (DSRev') avec la séquence d'étalement complémentaire à inversion temporelle (SRev') ; et
des premiers moyens (8) pour sommer les quatre corrélations du premier moyen pour corrélation.

**10.** Décodeur selon la revendication 9, le signal de données (DS) étant étalé à l'aide d'une fonction de Walsh (W(n,m)).

**11.** Décodeur selon la revendication 9, le signal de données (DS) étant étalé à l'aide d'une séquence de Golay-Walsh (AW(n,m)), qui est obtenue par multiplication d'une séquence de Golay (A) d'une paire de séquences de Golay en base deux (A, A') par une fonction de Walsh (W(m,n)).

**12.** Décodeur selon les revendications 9 à 11, les moyens de formation des séquences complémentaires (3, 6) sont des filtres de multiplication, qui multiplient les bribes individuelles d'une séquence en alternance par +1 et -1.

**13.** Décodeur selon l'une des revendications 9 à 12, les moyens de corrélation (KF1, KF2, KF3, KF4) étant des filtres de corrélation, les moyens de sommation (6) étant des filtres de sommation, et les moyens de stockage (2, 4, 5, 7) étant des registres à décalage.

**14.** Décodeur selon l'une des revendications 9 à 13, contenant en outre :

des moyens pour former (107) un signal de données étalé converti (DAW) par multiplication du signal de données étalé (DS) par une séquence de Golay-Walsh (AW(n,1)) ;
des moyens pour former (108) le signal de données étalé converti à inversion temporelle ($DAW_{Rev}$);
des moyens pour former (109) le signal de données étalé converti complémentaire (DAW') à partir du signal de données converti étalé (DAW) et du signal de données étalé converti à inversion temporelle ($DAW_{Rev}$') à partir du signal de données étalé converti à inversion temporelle ($DAW_{Rev}$) par multiplication de la séquence de bribes en alternance par +1 et -1 ;
des deuxièmes moyens pour la corrélation (110) du signal de données étalé converti (DAW) avec une séquence de Golay-Walsh (AW), du signal de données étalé converti à inversion temporelle ($DAW_{Rev}$) avec la séquence de Golay-Walsh à inversion temporelle ($AW_{Rev}$), du signal de données étalé converti complémentaire (DAW') avec la séquence de Golay-Walsh complémentaire (AW') et du signal de données étalé converti complémentaire à inversion temporelle ($DAW_{Rev}$') avec la séquence de Golay-Walsh complémentaire à inversion temporelle ($AW_{Rev}$') ;
des deuxièmes moyens pour la sommation (111) des quatre corrélations du deuxième moyen pour corrélation ; et des moyens pour associer (112) par conjonction la somme des premiers moyens de sommation et de la somme des deuxièmes moyens de sommation.

**15.** Dispositif pour la communication numérique avec modulation par étalement, qui côté émetteur comprend un codeur pour étaler des signaux de données avec des séquences d'étalement (S) et côté récepteur un décodeur selon l'une des revendications 9 à 14.

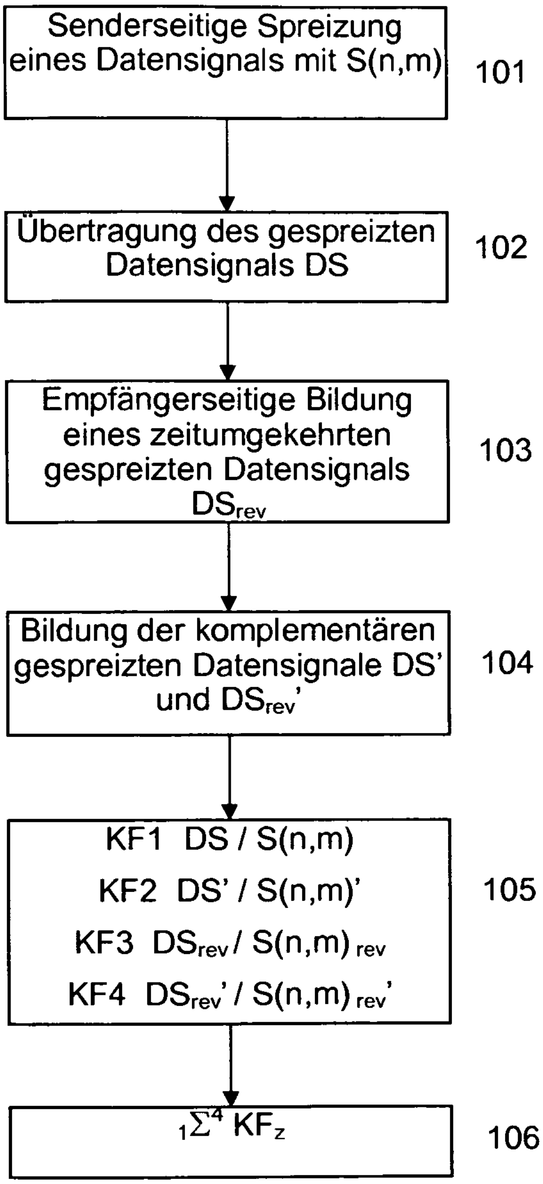
Senderseitige Spreizung eines Datensignals mit S(n,m)
101
Übertragung des gespreizten Datensignals DS
102
Empfängerseitige Bildung eines zeitumgekehrten gespreizten Datensignals $DS_{rev}$
103
Bildung der komplementären gespreizten Datensignale DS' und $DS_{rev}$'
104
KF1 DS / S(n,m)
KF2 DS' / S(n,m)'
KF3 $DS_{rev}$ / $S(n,m)_{rev}$
KF4 $DS_{rev}$' / $S(n,m)_{rev}$'
105
$_1\Sigma^4 KF_z$
106

Fig. 1

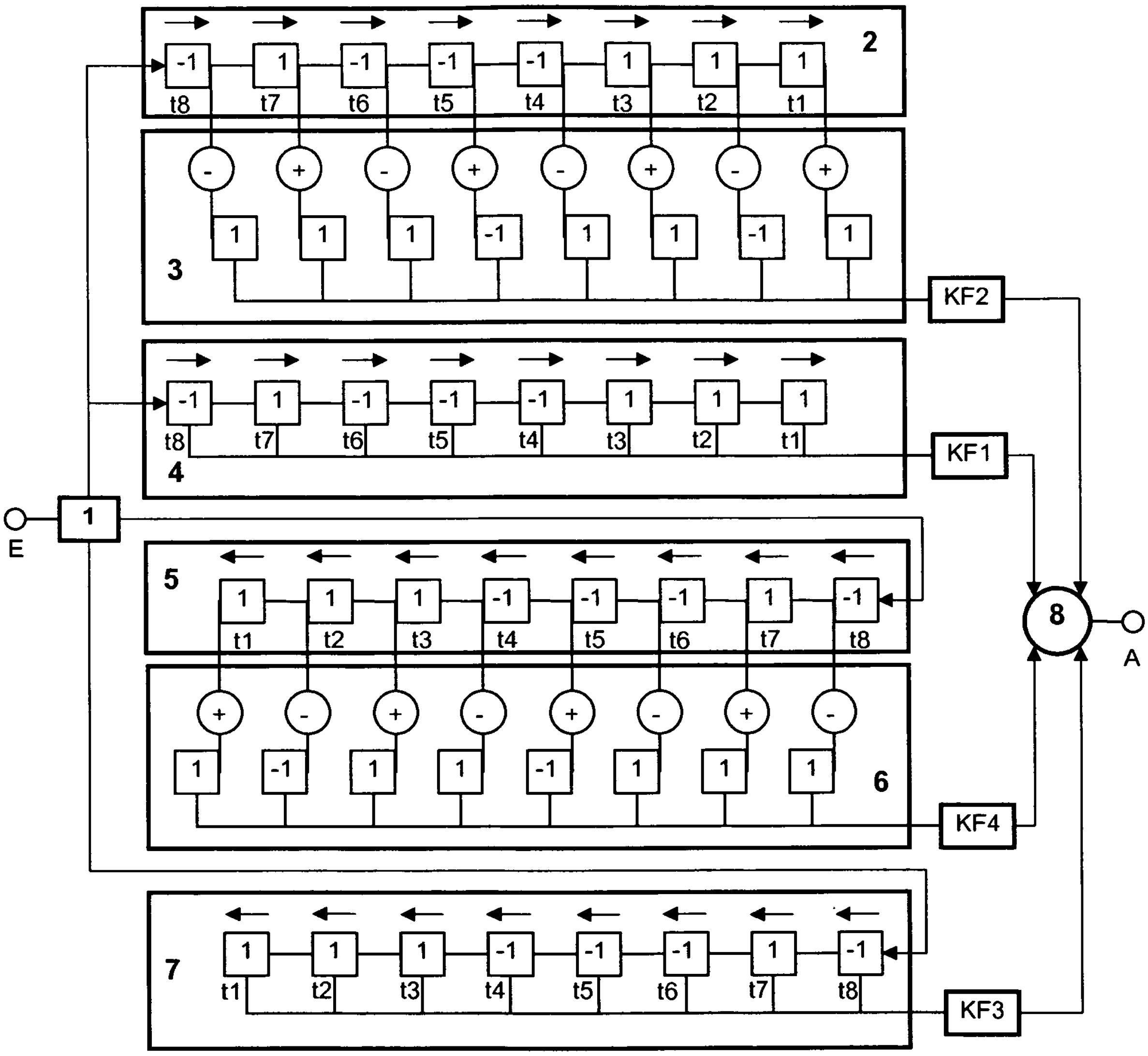


Fig. 2

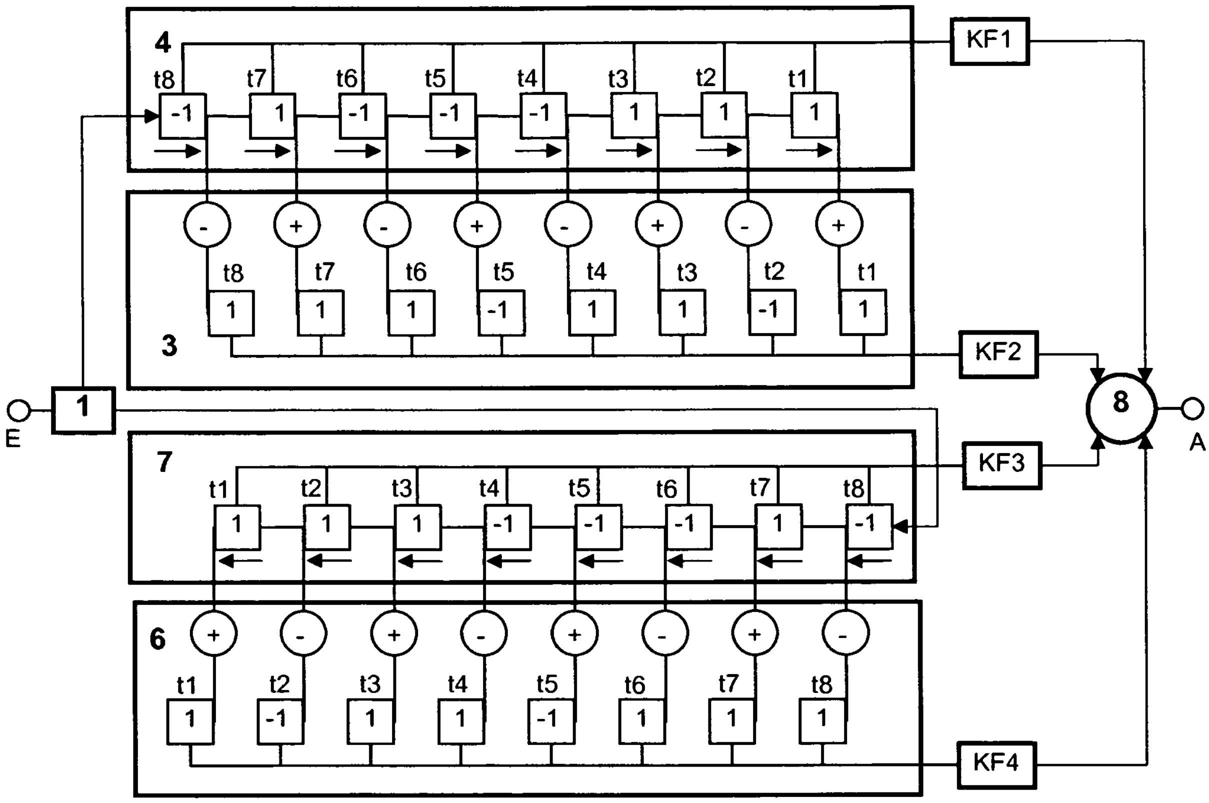
4
t8 t7 t6 t5 t4 t3 t2 t1
-1 1 -1 -1 -1 1 1 1
KF1
3
t8 t7 t6 t5 t4 t3 t2 t1
1 1 1 -1 1 1 -1 1
KF2
E
1
8
A
7
t1 t2 t3 t4 t5 t6 t7 t8
1 1 1 -1 -1 -1 1 -1
KF3
6
t1 t2 t3 t4 t5 t6 t7 t8
1 -1 1 1 -1 1 1 1
KF4

Fig. 3

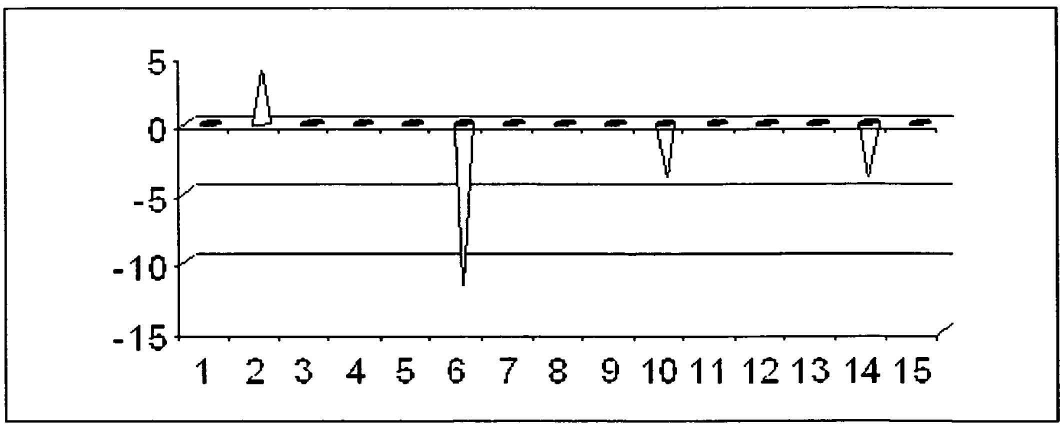
5
0
-5
-10
-15
1 2 3 4 5 6 7 8 9 10 11 12 13 14 15

Fig. 4

| | **Zeitachse** (Verschiebung in Anzahl der Subpulse τ) | | | | | | | | | | | | | | |
|---|---|---|---|---|---|---|---|---|---|---|---|---|---|---|---|
| | $t_{15}$ | $t_{14}$ | $t_{13}$ | $t_{12}$ | $t_{11}$ | $t_{10}$ | $t_9$ | $t_8$ | $t_7$ | $t_6$ | $t_5$ | $t_4$ | $t_3$ | $t_2$ | $t_1$ |
| **Korrelationssummen** | | | | | | | | | | | | | | | |
| AW(3,1) / AW(3,1) | 0 | 0 | 0 | 0 | 0 | 0 | 0 | 32 | 0 | 0 | 0 | 0 | 0 | 0 | 0 |
| AW(3,1) / AW(3,3) | 0 | 0 | 0 | 0 | 0 | 0 | 0 | 0 | 0 | 0 | 0 | 0 | 0 | 0 | 0 |
| AW(3,1) / AW(3,5) | 0 | 0 | 0 | 0 | 0 | 0 | 0 | 0 | 0 | 0 | 0 | 0 | 0 | 0 | 0 |
| AW(3,1) / AW(3,7) | 0 | 0 | 0 | 0 | 0 | 16 | 0 | 0 | 0 | 16 | 0 | 0 | 0 | 0 | 0 |
| | | | | | | | | | | | | | | | |
| AW(3,3) / AW(3,1) | 0 | 0 | 0 | 0 | 0 | 0 | 0 | 0 | 0 | 0 | 0 | 0 | 0 | 0 | 0 |
| AW(3,3) / AW(3,3) | 0 | 0 | 0 | 0 | 0 | 0 | 0 | 32 | 0 | 0 | 0 | 0 | 0 | 0 | 0 |
| AW(3,3) / AW(3,5) | 0 | 0 | 0 | 0 | 0 | -16 | 0 | 0 | 0 | -16 | 0 | 0 | 0 | 0 | 0 |
| AW(3,3) / AW(3,7) | 0 | 0 | 0 | 0 | 0 | 0 | 0 | 0 | 0 | 0 | 0 | 0 | 0 | 0 | 0 |
| | | | | | | | | | | | | | | | |
| AW(3,5) / AW(3,1) | 0 | 0 | 0 | 0 | 0 | 0 | 0 | 0 | 0 | 0 | 0 | 0 | 0 | 0 | 0 |
| AW(3,5) / AW(3,3) | 0 | 0 | 0 | 0 | 0 | -16 | 0 | 0 | 0 | -16 | 0 | 0 | 0 | 0 | 0 |
| AW(3,5) / AW(3,5) | 0 | 0 | 0 | 0 | 0 | 0 | 0 | 32 | 0 | 0 | 0 | 0 | 0 | 0 | 0 |
| AW(3,5) / AW(3,7) | 0 | 0 | 0 | 0 | 0 | 0 | 0 | 0 | 0 | 0 | 0 | 0 | 0 | 0 | 0 |
| | | | | | | | | | | | | | | | |
| AW(3,7) / AW(3,1) | 0 | 0 | 0 | 0 | 0 | 16 | 0 | 0 | 0 | 16 | 0 | 0 | 0 | 0 | 0 |
| AW(3,7) / AW(3,3) | 0 | 0 | 0 | 0 | 0 | 0 | 0 | 0 | 0 | 0 | 0 | 0 | 0 | 0 | 0 |
| AW(3,7) / AW(3,5) | 0 | 0 | 0 | 0 | 0 | 0 | 0 | 0 | 0 | 0 | 0 | 0 | 0 | 0 | 0 |
| AW(3,7) / AW(3,7) | 0 | 0 | 0 | 0 | 0 | 0 | 0 | 32 | 0 | 0 | 0 | 0 | 0 | 0 | 0 |

Fig. 5

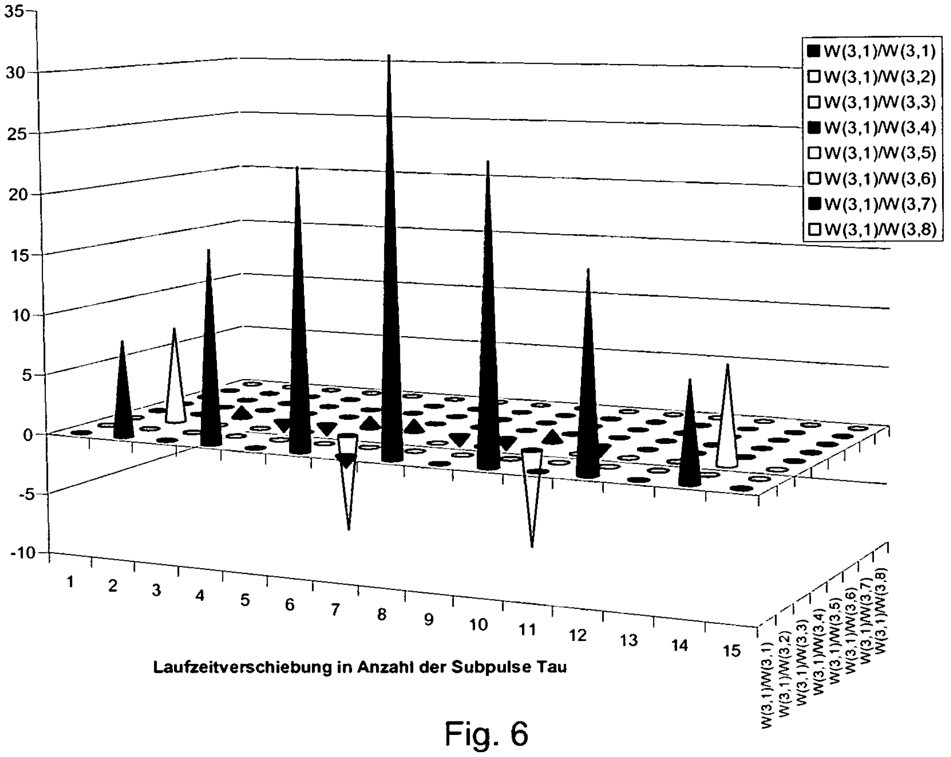
W(3,1)/W(3,1)
W(3,1)/W(3,2)
W(3,1)/W(3,3)
W(3,1)/W(3,4)
W(3,1)/W(3,5)
W(3,1)/W(3,6)
W(3,1)/W(3,7)
W(3,1)/W(3,8)
Laufzeitverschiebung in Anzahl der Subpulse Tau

Fig. 6

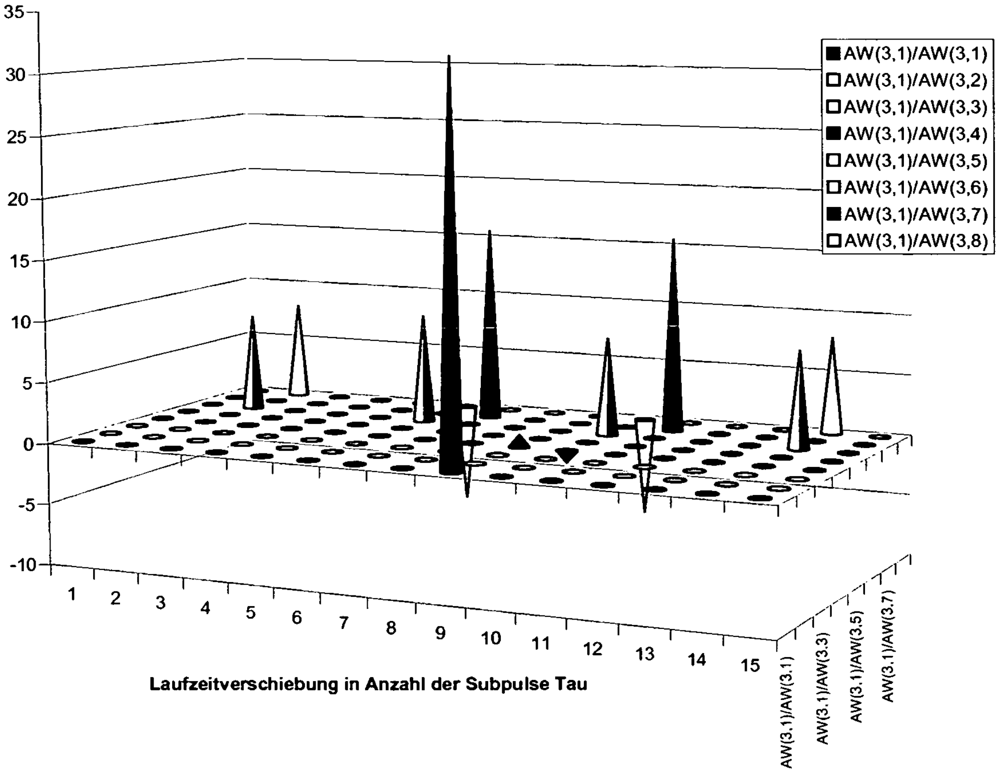
AW(3,1)/AW(3,1)
AW(3,1)/AW(3,2)
AW(3,1)/AW(3,3)
AW(3,1)/AW(3,4)
AW(3,1)/AW(3,5)
AW(3,1)/AW(3,6)
AW(3,1)/AW(3,7)
AW(3,1)/AW(3,8)
Laufzeitverschiebung in Anzahl der Subpulse Tau

Fig. 7

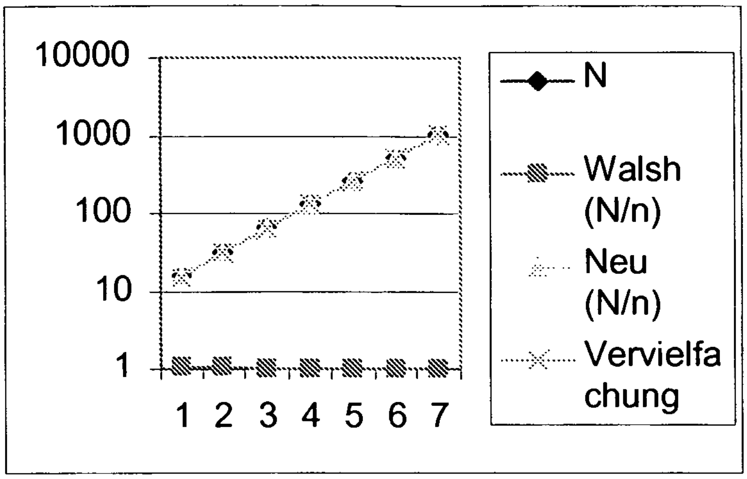
10000
1000
100
10
1
1 2 3 4 5 6 7
N
Walsh (N/n)
Neu (N/n)
Vervielfachung

Fig. 8

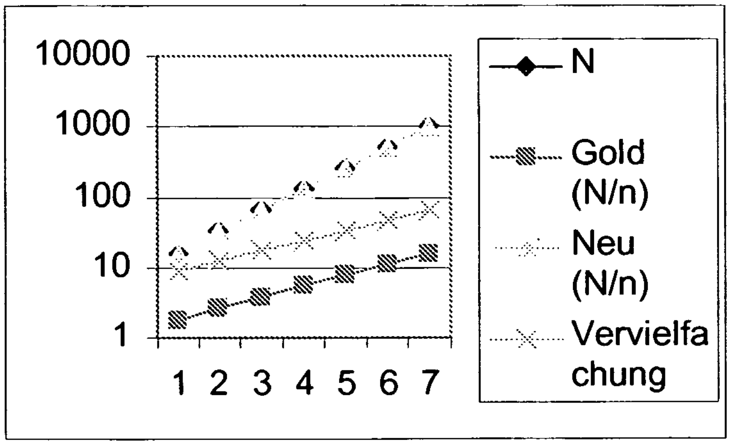
10000
1000
100
10
1
1 2 3 4 5 6 7
N
Gold (N/n)
Neu (N/n)
Vervielfachung

Fig. 9

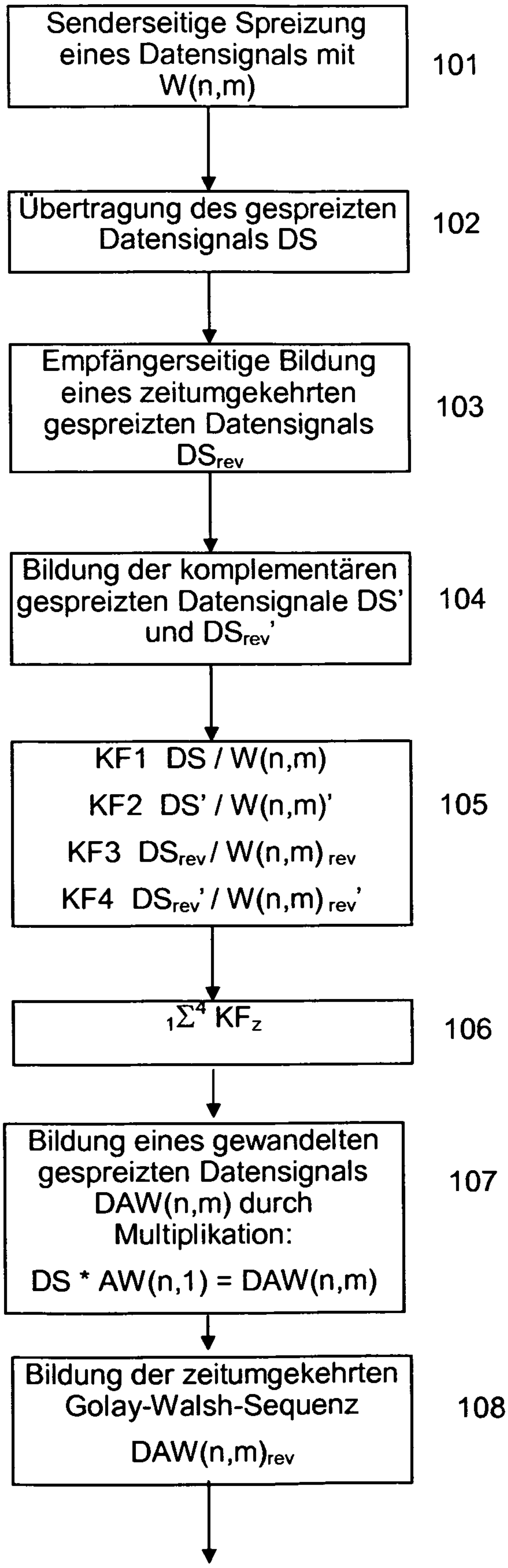
Senderseitige Spreizung eines Datensignals mit W(n,m)
101
Übertragung des gespreizten Datensignals DS
102
Empfängerseitige Bildung eines zeitumgekehrten gespreizten Datensignals $DS_{rev}$
103
Bildung der komplementären gespreizten Datensignale DS' und $DS_{rev}'$
104
KF1 DS / W(n,m)
KF2 DS' / W(n,m)'
KF3 $DS_{rev}$ / $W(n,m)_{rev}$
KF4 $DS_{rev}'$ / $W(n,m)_{rev}'$
105
$_1\Sigma^4 KF_z$
106
Bildung eines gewandelten gespreizten Datensignals DAW(n,m) durch Multiplikation:
DS * AW(n,1) = DAW(n,m)
107
Bildung der zeitumgekehrten Golay-Walsh-Sequenz
$DAW(n,m)_{rev}$
108

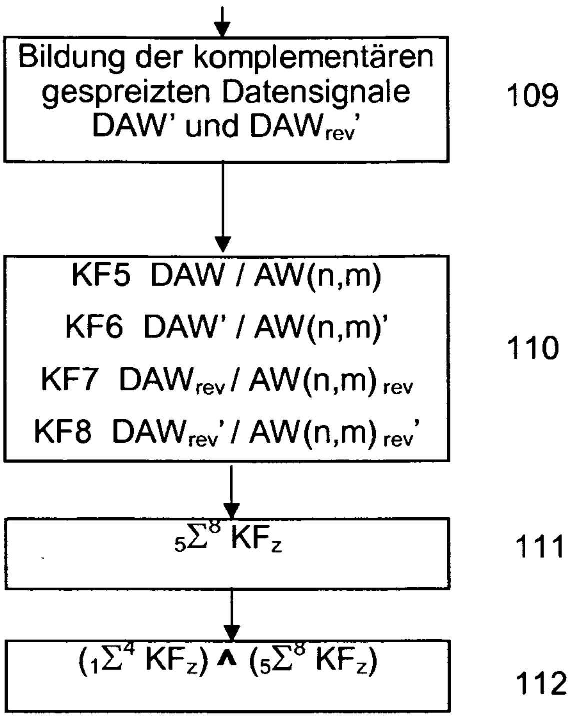
Bildung der komplementären gespreizten Datensignale DAW' und DAW$_{rev}$'
109
KF5 DAW / AW(n,m)
KF6 DAW' / AW(n,m)'
KF7 DAW$_{rev}$ / AW(n,m)$_{rev}$
KF8 DAW$_{rev}$' / AW(n,m)$_{rev}$'
110
$_5\Sigma^8$ KF$_z$
111
($_1\Sigma^4$ KF$_z$) ∧ ($_5\Sigma^8$ KF$_z$)
112

Fig. 10

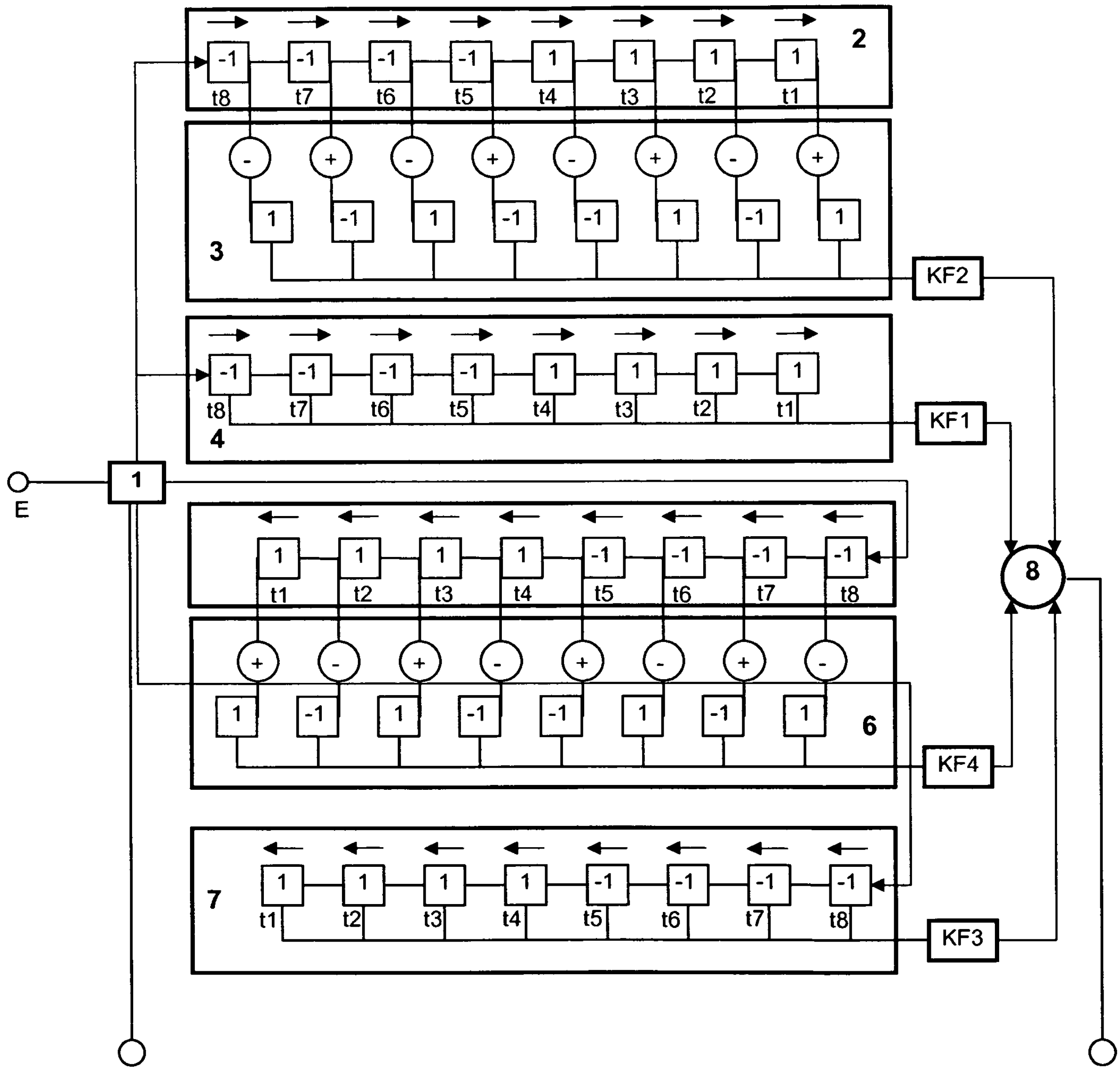
2
-1 -1 -1 -1 1 1 1 1
t8 t7 t6 t5 t4 t3 t2 t1
- + - + - + - +
1 -1 1 -1 -1 1 -1 1
3
KF2
-1 -1 -1 -1 1 1 1 1
t8 t7 t6 t5 t4 t3 t2 t1
4
KF1
E
1
1 1 1 1 -1 -1 -1 -1
t1 t2 t3 t4 t5 t6 t7 t8
+ - + - + - + -
1 -1 1 -1 -1 1 -1 1
6
KF4
8
7
1 1 1 1 -1 -1 -1 -1
t1 t2 t3 t4 t5 t6 t7 t8
KF3

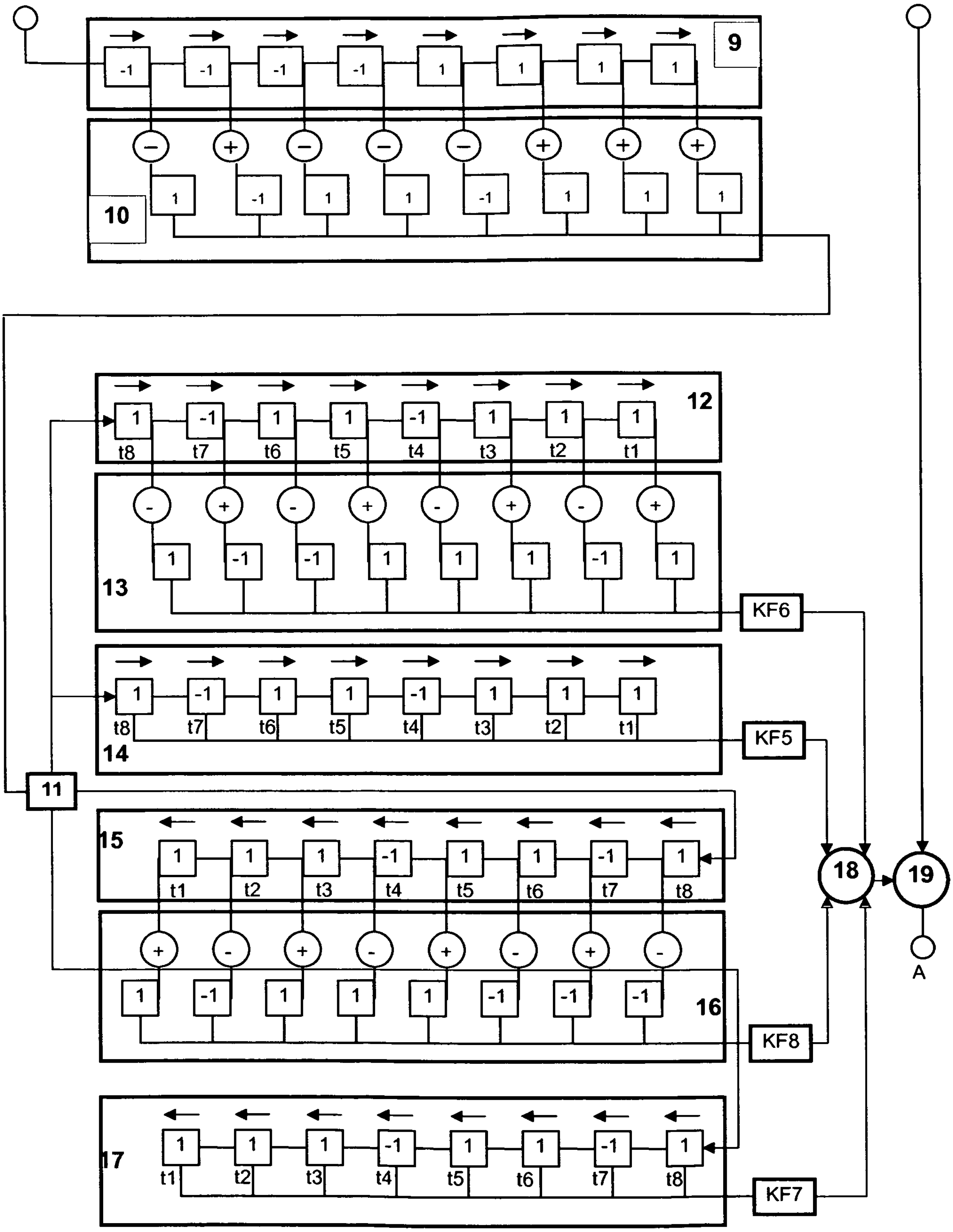
9
-1
1
10
12
13
14
11
15
16
17
t1
t2
t3
t4
t5
t6
t7
t8
KF5
KF6
KF7
KF8
18
19
A

Fig. 11

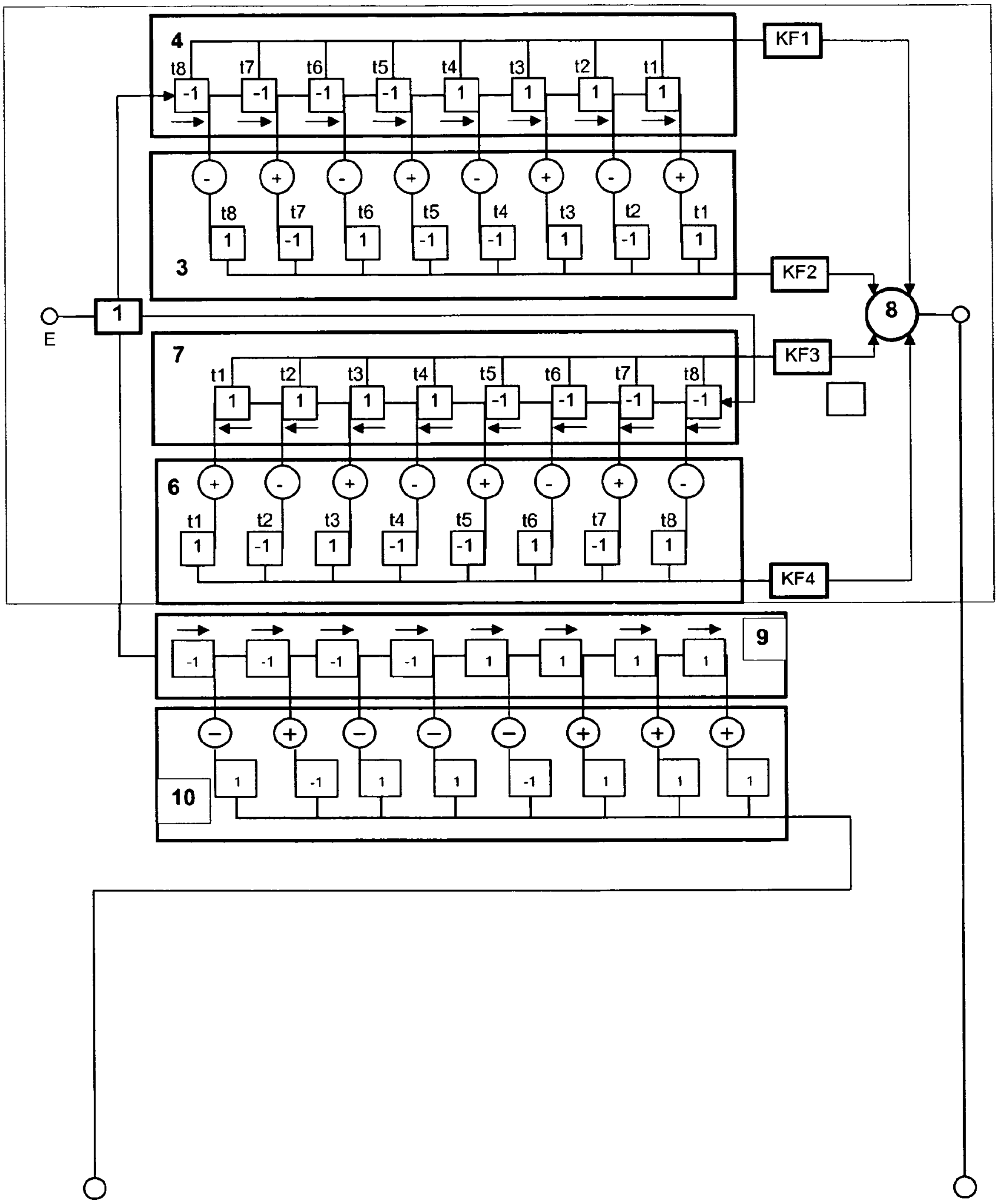
4
KF1
3
KF2
8
1
E
7
KF3
6
KF4
9
10

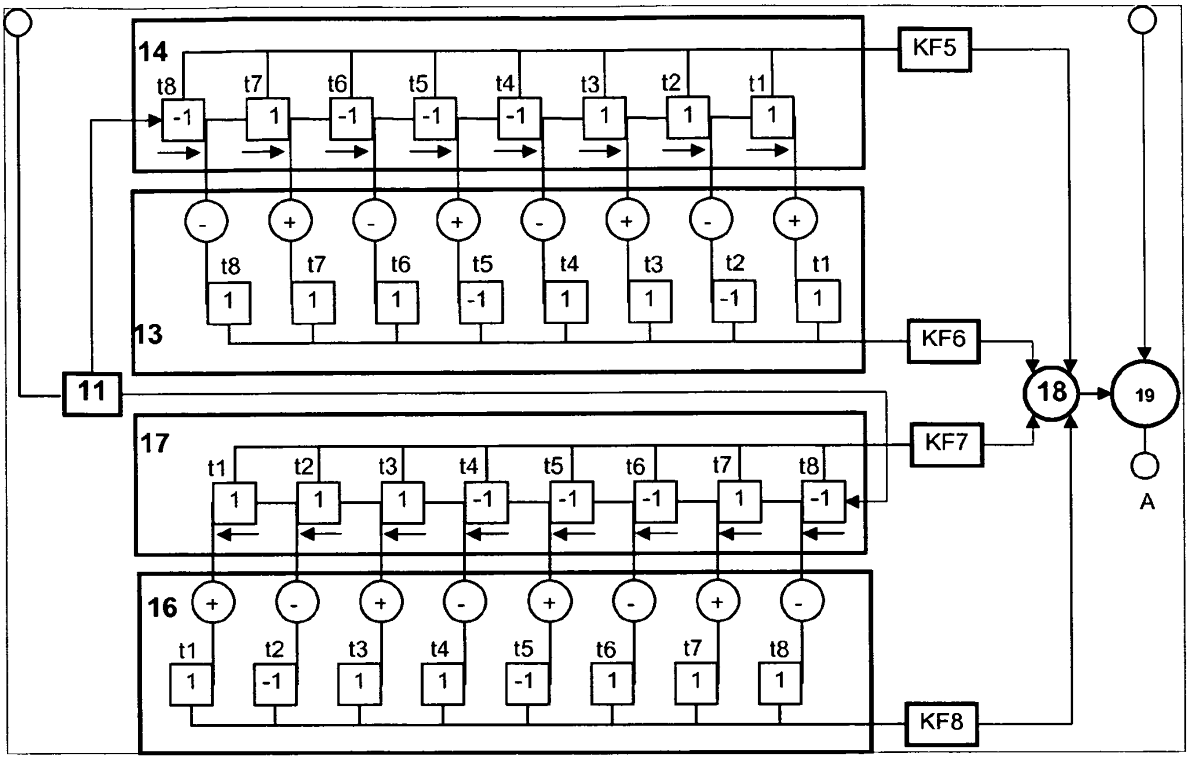
14
t8
-1
t7
1
t6
-1
t5
-1
t4
-1
t3
1
t2
1
t1
1
KF5
-
+
-
+
-
+
-
+
t8
1
t7
1
t6
1
t5
-1
t4
1
t3
1
t2
-1
t1
1
13
KF6
11
18
19
17
t1
1
t2
1
t3
1
t4
-1
t5
-1
t6
-1
t7
1
t8
-1
KF7
A
16
+
-
+
-
+
-
+
-
t1
1
t2
-1
t3
1
t4
1
t5
-1
t6
1
t7
1
t8
1
KF8

Fig. 12

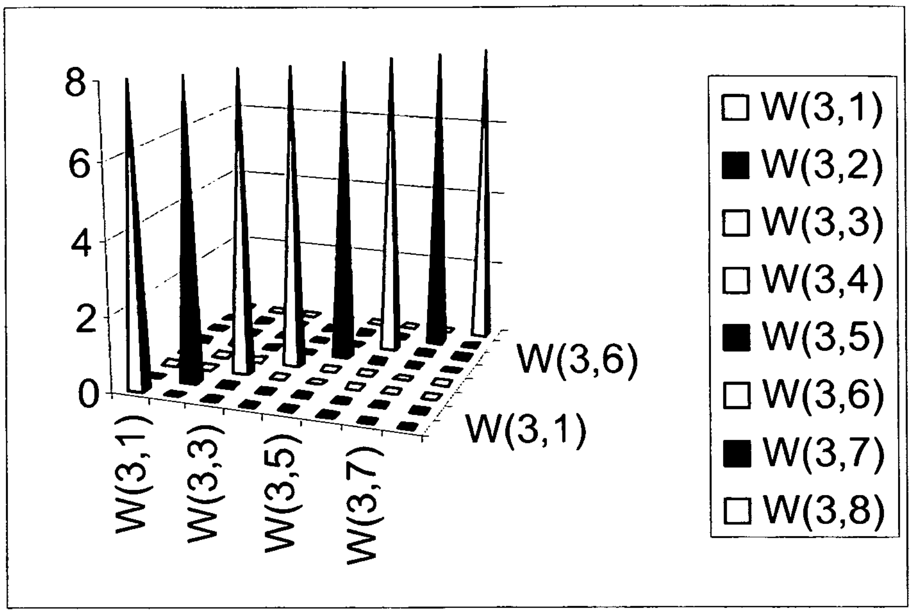


Fig. 13

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 19717546 A1
- EP 1311095 B1
- EP 1726114 B1


### In der Beschreibung aufgeführte Nicht-Patentliteratur


- **J. G. PROAKIS ; M. SALEHI.** Matched Filter. *Grundlagen der Kommunikationstechnik, Pearson Studium, München,* 2004, 793-797
- **R. GOLD.** Optimal Binary Sequences for Spread Spectrum Multiplexing. *IEEE Transactions on Information Theory,* 1967, vol. IT-13, 619-621
- **M.J.E. GOLAY.** Complementary Sequences. *IRE Transactions on Information Theory,* April 1961, vol. IT-7, 82-87